# EUROPEAN PATENT APPLICATION

(11) **EP 4 598 107 A1**
(43) Date of publication of application: **06.08.2025**
(21) Application number: 22960866.6
(22) Date of filing: 28.09.2022
(51) Int. Cl.: H04W 24/10, H04W 72/0453

(54) **TERMINAL, WIRELESS COMMUNICATION METHOD, AND BASE STATION**

(71) Applicant: NTT DOCOMO, INC., Tokyo 100-6150 (JP)
(72) Inventor: MATSUMURA, Yuki, Tokyo 100-6150 (JP); NAGATA, Satoshi, Tokyo 100-6150 (JP); WANG, Jing, Beijing 100190 (CN); CHEN, Lan, Beijing 100190 (CN)
(74) Representative: Hoffmann Eitle
(86) International application number: PCT/JP2022/036223
(87) International publication number: WO 2024/069803

(57) **Abstract**

A terminal according to an aspect of the present disclosure includes: a receiving section that receives information related to at least one of a channel state information resource configuration and a channel state information report configuration for one or more candidate cells corresponding to different frequencies; and a control section that controls, based on the information related to at least one of the channel state information resource configuration and the channel state information report configuration, to report channel state information including at least one of L1-RSRP (Reference Signal Received Power) and L1-SINR (Signal to Interference plus Noise Ratio) for the one or more candidate cells.

## Description

### Technical Field

The present disclosure relates to a terminal, a radio communication method, and a base station in next-generation mobile communication systems.

### Background Art

In a Universal Mobile Telecommunications System (UMTS) network, the specifications of Long-Term Evolution (LTE) have been drafted for the purpose of further increasing high speed data rates, providing lower latency, and the like (Non-Patent Literature 1). In addition, for the purpose of further high capacity, advancement and the like of LTE (Third Generation Partnership Project (3GPP) Release (Rel.) 8 and Rel. 9), the specifications of LTE-Advanced (3GPP Rel. 10 to Rel. 14) have been drafted.

Successor systems of LTE (for example, also referred to as "5th generation mobile communication system (5G)," "5G+ (plus)," "6th generation mobile communication system (6G)," "New Radio (NR)," "3GPP Rel. 15 (or later versions)," and so on) are also under study.

### Citation List

### Non-Patent Literature

Non-Patent Literature 1: 3GPP TS 36.300 V8.12.0 "Evolved Universal Terrestrial Radio Access (E-UTRA) and Evolved Universal Terrestrial Radio Access Network (E-UTRAN); Overall description; Stage 2 (Release 8)," April, 2010

### Summary of Invention

### Technical Problem

It is assumed that, in future radio communication systems (for example, radio communication systems of Rel. 16/5G or later), communication is controlled based on inter-cell mobility with a plurality of cells including a non-serving cell or inter-cell mobility using a plurality of transmission/reception points (for example, multi-TRP (MTRP)).

In addition, it is assumed that, in inter-cell mobility, a serving cell and a candidate cell are configured and switching from the serving cell to the candidate cell is performed. In this case, it is assumed that, for the candidate cell (or a frequency of the candidate cell), CSI measurement/reporting (for example, L1-RSRP/L1-SINR measurement and reporting) is supported.

In a case where a candidate cell is configured, however, how to control CSI measurement/reporting is an issue. Unless CSI measurement/reporting is performed appropriately, the communication quality may be degraded.

In view of this, an object of the present disclosure is to provide a terminal, a radio communication method, and a base station that enable measurement/reporting related to a candidate cell to be appropriately controlled even when the candidate cell is configured.

### Solution to Problem

A terminal according to an aspect of the present disclosure includes: a receiving section that receives information related to at least one of a channel state information resource configuration and a channel state information report configuration for one or more candidate cells corresponding to different frequencies; and a control section that performs, based on the information related to at least one of the channel state information resource configuration and the channel state information report configuration, control to report channel state information including at least one of L1-RSRP (Reference Signal Received Power) and L1-SINR (Signal to Interference plus Noise Ratio) for the one or more candidate cells.

### Advantageous Effects of Invention

An aspect of the present disclosure enables measurement/reporting related to a candidate cell to be appropriately controlled even when the candidate cell is configured.

### Brief Description of Drawings

[FIG. 1] FIG. 1A and FIG. 1B are diagrams to show examples of inter-cell mobility.
[FIG. 2] FIG. 2A and FIG. 2B are diagrams to show other examples of inter-cell mobility.
[FIG. 3] FIG. 3 is a diagram to show an example of configuration examples 1 to 3 when candidate cells are supported.
[FIG. 4] FIG. 4A to FIG. 4C are diagrams to show respective examples of a case where candidate cell/candidate cell group switching by L1/L2 signaling is performed in configuration examples 1 to 3 when candidate cells are supported.
[FIG. 5] FIG. 5 is a diagram to show an overview of a CSI report configuration of RRC.
[FIG. 6] FIG. 6 is a diagram to show part of a CSI resource configuration in Rel. 17.
[FIG. 7] FIG. 7 is a diagram to show part of a CSI-SSB resource set in Rel. 17.
[FIG. 8] FIG. 8 is a diagram to show a configuration related to L3 measurement/reporting in Rel. 17.
[FIG. 9] FIG. 9 is a diagram to show an example of a CSI report according to a first embodiment.
[FIG. 10] FIG. 10 is a diagram to show an example of a candidate cell set according to a third embodiment.
[FIG. 11] FIG. 11 is a diagram to show another example of the candidate cell set according to the third embodiment.
[FIG. 12] FIG. 12 is a diagram to show another example of the candidate cell set according to the third embodiment.
[FIG. 13] FIG. 13 is a diagram to show an example of a candidate cell set according to a fourth embodiment.
[FIG. 14] FIG. 14 is a diagram to show another example of the candidate cell set according to the fourth embodiment.
[FIG. 15] FIG. 15 is a diagram to show another example of the candidate cell set according to the fourth embodiment.
[FIG. 16] FIG. 16 is a diagram to show another example of the candidate cell set according to the fourth embodiment.
[FIG. 17] FIG. 17 is a diagram to show an example of a schematic structure of a radio communication system according to one embodiment.
[FIG. 18] FIG. 18 is a diagram to show an example of a structure of a base station according to one embodiment.
[FIG. 19] FIG. 19 is a diagram to show an example of a structure of a user terminal according to one embodiment.
[FIG. 20] FIG. 20 is a diagram to show an example of a hardware structure of the base station and the user terminal according to one embodiment.
[FIG. 21] FIG. 21 is a diagram to show an example of a vehicle according to one embodiment.

### Description of Embodiments

### (TCI, Spatial Relation, QCL)

For NR, control of reception processing (for example, at least one of reception, de-mapping, demodulation, and decoding) and transmission processing (for example, at least one of transmission, mapping, precoding, modulation, and coding) of at least one of a signal and a channel (referred to as a signal/channel) in a UE, based on a transmission configuration indication state (TCI state) has been under study.

The TCI state may be a state applied to a downlink signal/channel. A state that corresponds to the TCI state applied to an uplink signal/channel may be expressed as spatial relation.

The TCI state is information related to quasi-co-location (QCL) of the signal/channel, and may be referred to as a spatial reception parameter, spatial relation information, or the like. The TCI state may be configured for the UE for each channel or for each signal.

QCL is an indicator indicating statistical properties of the signal/channel. For example, when a certain signal/channel and another signal/channel are in a relationship of QCL, this may mean that it is assumable that at least one of a Doppler shift, a Doppler spread, an average delay, a delay spread, and a spatial parameter (for example, a spatial reception parameter (spatial Rx parameter)) is the same (the relationship of QCL is satisfied in at least one of these) between these different signals/channels.

Note that the spatial reception parameter may correspond to a receive beam of the UE (for example, a receive analog beam), and the beam may be identified based on spatial QCL. The QCL (or at least one element in the relationship of QCL) in the present disclosure may be interpreted as sQCL (spatial QCL).

For the QCL, a plurality of types (QCL types) may be defined. For example, four QCL types A to D may be provided, which have different parameter(s) (or parameter set(s)) that can be assumed to be the same, and such parameter(s) (which may be referred to as QCL parameter(s)) are described below:
- QCL type A (QCL-A): Doppler shift, Doppler spread, average delay, and delay spread
- QCL type B (QCL-B): Doppler shift and Doppler spread
- QCL type C (QCL-C): Doppler shift and average delay
- QCL type D (QCL-D): Spatial reception parameter

A case that the UE assumes that a certain control resource set (CORESET), channel, or reference signal is in a relationship of specific QCL (for example, QCL type D) with another CORESET, channel, or reference signal may be referred to as QCL assumption.

The UE may determine at least one of a transmit beam (Tx beam) and a receive beam (Rx beam) of the signal/channel, based on the TCI state or the QCL assumption of the signal/channel.

The TCI state may be, for example, information related to QCL between a channel as a target (in other words, a reference signal (RS) for the channel) and another signal (for example, another RS). The TCI state may be configured (indicated) by higher layer signaling or physical layer signaling, or a combination of these.

In the present disclosure, the higher layer signaling may be, for example, any one or combinations of Radio Resource Control (RRC) signaling, Medium Access Control (MAC) signaling, broadcast information, and the like.

The MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

The physical layer signaling may be, for example, downlink control information (DCI).

Note that a channel/signal being a target of application of a TCI state may be referred to as a target channel/reference signal (RS) or simply as a target, and another signal described above may be referred to as a reference reference signal (reference RS), a source RS, or simply as a reference.

A channel for which the TCI state or spatial relation is configured (specified) may be, for example, at least one of a downlink shared channel (Physical Downlink Shared Channel (PDSCH)), a downlink control channel (Physical Downlink Control Channel (PDCCH)), an uplink shared channel (Physical Uplink Shared Channel (PUSCH)), and an uplink control channel (Physical Uplink Control Channel (PUCCH)).

The RS to have a QCL relationship with the channel may be, for example, at least one of a synchronization signal block (SSB), a channel state information reference signal (CSI-RS), a reference signal for measurement (Sounding Reference Signal (SRS)), a CSI-RS for tracking (also referred to as a Tracking Reference Signal (TRS)), a reference signal for QCL detection (also referred to as a QRS), a reference signal for demodulation (DeModulation Reference Signal (DMRS)), and the like.

The SSB is a signal block including at least one of a primary synchronization signal (PSS), a secondary synchronization signal (SSS), and a broadcast channel (Physical Broadcast Channel (PBCH)). The SSB may be referred to as an SS/PBCH block.

An RS of QCL type X in a TCI state may mean an RS in a relationship of QCL type X with (a DMRS of) a certain channel/signal, and this RS may be referred to as a QCL source of QCL type X in the TCI state.

### (Inter-cell Mobility)

For NR, it is studied that one or a plurality of transmission/reception points (TRPs) (multi-TRP (MTRP)) perform DL transmission to a UE. It is also studied that the UE performs UL transmission to the one or plurality of TRPs.

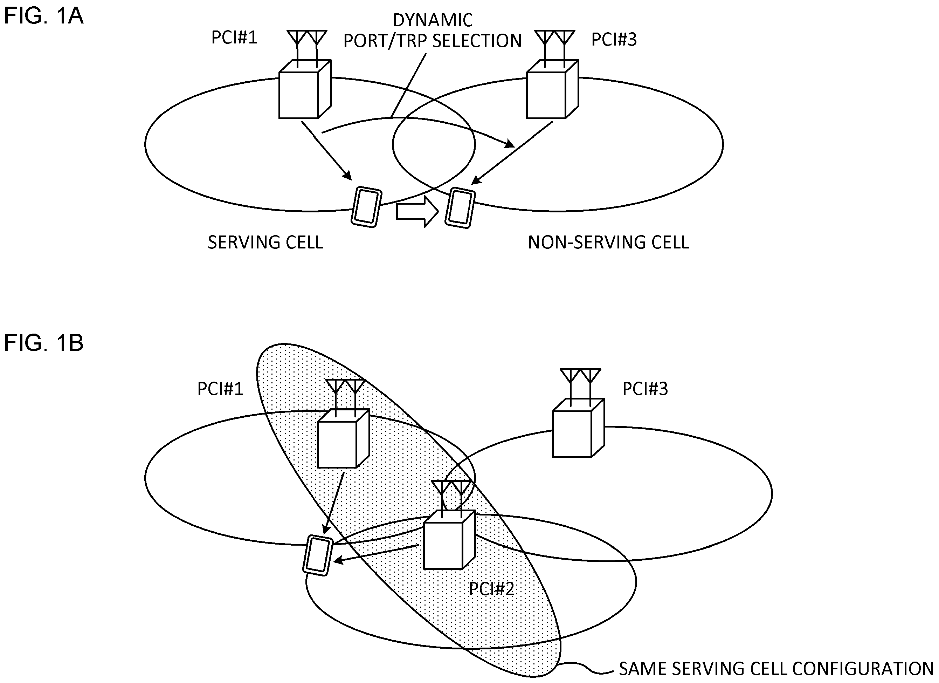

It is considered that a UE receives channels/signals from a plurality of cells/TRPs in inter-cell mobility (for example, L1/L2 inter cell mobility) (see FIGS. 1A and 1B).

FIG. 1A shows an example of inter-cell mobility with cells including a non-serving cell (for example, Single-TRP inter-cell mobility). A UE may be configured with one TRP (or a single TRP) in each cell. Here, shown is a case where the UE receives channels/signals from a base station/TRP of cell #1 being a serving cell, and a base station/TRP of cell #3 being not a serving cell (non-serving cell). For example, this corresponds to a case where the UE switches from cell #1 to cell #3 (for example, fast cell switch).

In this case, selection of a port (for example, an antenna port)/TRP or may be performed dynamically. The selection of a port (for example, an antenna port)/TRP or may be performed based on a TCI state indicated or updated by DCI/MAC CE. Here, shown is a case of supporting configuration of different physical cell IDs (for example, PCIs) for cell #1 and cell #3.

FIG. 1B shows an example of a multi-TRP scenario (for example, inter-cell mobility in a case of using multi-TRP (Multi-TRP inter-cell mobility)). A UE may be configured with a plurality of (for example, two) TRPs (or different CORESET pool indices) in each cell. Here, shown is a case where the UE receives channels/signals from TRP #1 and TRP 2. Here, also shown is a case where TRP #1 corresponds to physical cell ID (PCI) #1 and TRP #2 corresponds to PCI #2.

The multi-TRP (for example, TRPs #1 and #2) may be connected via ideal/non-ideal backhaul to exchange information, data, and the like. Each TRP of the multi-TRP may transmit the same or a different codeword (Code Word (CW)) and the same or a different layer. As one mode of multi-TRP transmission, non-coherent joint transmission (NCJT) may be employed as shown in FIG. 1B. Here, shown is a case where NCJT is performed between TRPs corresponding to different PCIs. Note that the same serving cell configuration may be applied/configured for TRP #1 and TRP #2.

It may be defined that a plurality of PDSCHs (multi-PDSCH) subjected to NCJT partially or completely overlap with respect to at least one of time and frequency domains. In other words, a first PDSCH from TRP #1 and a second PDSCH from TRP #2 may overlap in terms of at least one of time and frequency resources. The first PDSCH and the second PDSCH may be used for transmission of the same TB or may be used for transmission of different TBs.

The first PDSCH and the second PDSCH may be may be assumed not to be in a quasi-co-location (QCL) relationship (not to be quasi-co-located). Reception of the multi-PDSCH may be interpreted as simultaneous reception of PDSCHs of a QCL type other than a certain QCL type (for example, QCL type D).

A plurality of PDSCHs (which may be referred to as multi-PDSCH (multiple PDSCHs)) from the multi-TRP may be scheduled by using one piece of DCI (single DCI (S-DCI, single PDCCH)) (single-master mode). The one piece of DCI may be transmitted from one TRP of the multi-TRP. A structure using one piece of DCI in multi-TRP may be referred to as single-DCI based multi-TRP (mTRP/MTRP).

The plurality of PDSCHs from the multi-TRP may be scheduled by using a plurality of respective pieces of DCI (multi-DCI (M-DCI), multi-PDCCH (multiple PDCCHs)). The plurality of pieces of DCI may be transmitted from respective TRPs of the multi-TRP. A structure using a plurality of pieces of DCI in multi-TRP may be referred to as multi-DCI based multi-TRP (mTRP/MTRP).

The UE may assume to transmit, to the different TRPs, separate CSI reports related to the respective TRPs. Such CSI feedback may be referred to as separate feedback, separate CSI feedback, and the like. In the present disclosure, "separate" and "independent" may be interchangeably interpreted.

In inter-cell mobility, Scenario 1 or Scenario 2 below is conceivable. Note that, in the present disclosure, a serving cell may be interpreted as a TRP in the serving cell. Layer1/layer2 (L1/L2) and DCI/Medium Access Control Control Element (MAC CE) may be interchangeably interpreted. In the present disclosure, a physical cell ID (Physical Cell Identity (PCI)) different from a PCI of a current serving cell may be simply referred to as a "different PCI." A non-serving cell, a cell having a different PCI, and an additional cell may be interchangeably interpreted.

### <Scenario 1>

Scenario 1 corresponds to multi-TRP inter-cell mobility, for example. Note that Scenario 1 may be a scenario not corresponding to multi-TRP inter-cell mobility. In Scenario 1, for example, the following procedure is performed.

(1) A UE receives, from a serving cell, a configuration of an SSB for beam measurement of a TRP corresponding to a PCI different from that of the serving cell and a configuration required to use a radio resource for data transmission and reception, including a resource for the different PCI.
(2) The UE performs beam measurement of the TRP corresponding to the different PCI to report a beam measurement result to the serving cell.
(3) Based on the reporting described above, a transmission configuration indication (TCI) state associated with the TRP corresponding to the different PCI is activated by L1/L2 signaling from the serving cell.
(4) The UE performs transmission and reception by using a UE-dedicated channel on the TRP corresponding to the different PCI.
(5) The UE is required to cover the serving cell all the time, including a case of multi-TRP. The UE is, similarly to an existing system, required to use a common channel (broadcast control channel (BCCH), paging channel (PCH)) or the like from the serving cell.

In Scenario 1, when the UE transmits and receives a signal to and from an additional cell/TRP (a TRP corresponding to a PCI of the additional cell), the serving cell (serving cell assumption by the UE) is not changed. In other words, serving cell switching by L1/L2 is not supported. The UE is, from the serving cell, configured with a higher layer parameter related to a PCI of a non-serving cell. Scenario 1 may be applied in Rel. 17, for example.

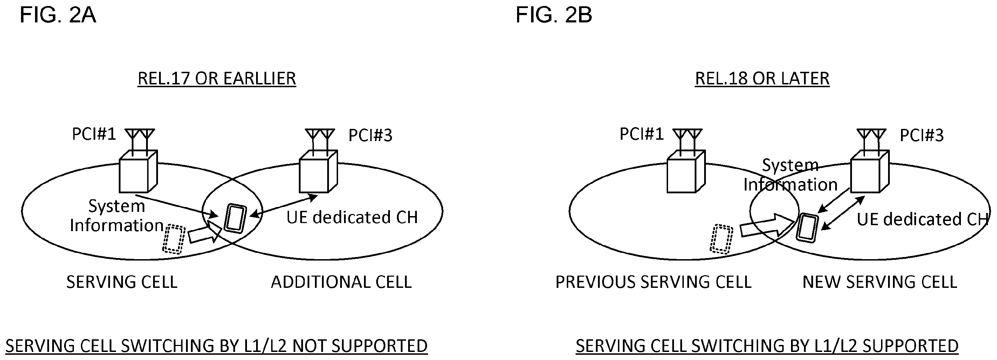

FIG. 2A is a diagram to show an example of mobility of a UE in Rel. 17. A case is assumed where the UE moves from a cell (serving cell) of PCI #1 to a cell (additional cell) of PCI #3 (having an overlap with the serving cell). In this case, in Rel. 17, serving cell switching by L1/L2 is not supported.

The additional cell is a cell having an additional PCI different from the PCI of the serving cell. The UE can receive/transmit a UE-dedicated channel from the additional cell. The UE is required to be in a coverage of the serving cell in order to receive a UE-common channel (for example, system information/paging/short message). When the UE moves out of the coverage of the serving cell, cell switching by handover (also referred to as L3 mobility) or the like is required.

### <Scenario 2>

In Scenario 2, L1/L2 inter-cell mobility is used. In L1/L2 inter-cell mobility, serving cell change can be performed by using a function such as beam control, without performing RRC reconfiguration. In other words, transmission and reception to and from an additional cell can be performed, without handover (or without any L3 mobility procedure). Handover requires RRC reconnection or the like that causes a data communication disabled period, and thus L1/L2 inter-cell mobility not requiring such handover is used, thereby enabling data communication to be continued even in serving cell change. In Scenario 2, for example, the following procedure is performed.

(1) A UE receives, from a serving cell, a configuration of an SSB of a cell (additional cell) having a different PCI in order for beam measurement/serving cell change.
(2) The UE performs beam measurement for the cell using the different PCI to report a measurement result to the serving cell.
(3) The UE may receive a configuration (serving cell configuration) of the cell having the different PCI by higher layer signaling (for example, RRC). In other words, pre-configuration related to the serving cell change may be performed. Such configuration may be performed together with configuration in (1) or may be performed separately.
(4) Based on the reporting described above, a TCI state for the cell having the different PCI may be activated by L1/L2 signaling in accordance with the serving cell change. The activation of the TCI state and the serving cell change may be performed separately.
(5) The UE changes the serving cell (serving cell assumption) and, by using a pre-configured UE-dedicated channel and the TCI state, initiates reception/transmission.

In other words, in Scenario 2, the serving cell (serving cell assumption by the UE) is updated by L1/L2 signaling. Scenario 2 may be applied in Rel. 18 or later versions.

FIG. 2B is a diagram to show an example of mobility of a UE in Rel. 18. In Rel. 18, the serving cell is switched by L1/L2. The UE can receive/transmit, from and to a new serving cell, a UE-dedicated channel/common channel. The UE may be out of the coverage of a previous serving cell.

### (Configuration of Candidate Cell)

In L1/L2 inter-cell mobility, in addition to a serving cell, a candidate cell may be configured. In the present disclosure, a candidate cell may be interpreted as a target cell, an additional cell, or an additional PCI. One or more candidate cells (or candidate cell groups) may be separately associated with respective serving cells. One or more candidate cells (or candidate cell groups) common to a plurality of serving cells may be provided.

Configuration of candidate cells (or candidate cell groups) may be configured, by using a certain higher layer parameter (for example, ServingCellConfig), similarly to inter-cell beam management (inter-cell BM) for existing systems (for example, Rel. 17 or earlier versions). Alternatively, for configuration of candidate cells (or candidate cell groups), a framework for carrier aggregation configuration (for example, CA configuration framework) or a framework for CHO (Conditional Handover)/CPC (Conditional PSCell Change) configuration may be reused.

For a candidate cell (or candidate cell group) configured by a higher layer parameter, the activation/deactivation thereof may be indicated to a UE by a MAC CE/DCI.

For configuration of a candidate cell (or association with a serving cell), at least one of configuration example 1 to configuration example 3 below may be used, for example. Here, an example is shown where SpCell #0, SCell #1, and SCell #2 are configured as the serving cells and candidate cells/candidate cell groups are configured separately from the serving cells. Configuration example 1 to configuration example 3 below are examples, and the number of serving cells/the number of candidate cells/the number of candidate cell groups, association between the serving cells and candidate cells, and the like are not limited to these examples and may be changed as appropriate. Alternatively, another configuration example(s) may be supported/employed in addition to/instead of configuration example 1 to configuration example 3.

### {Configuration Example 1}

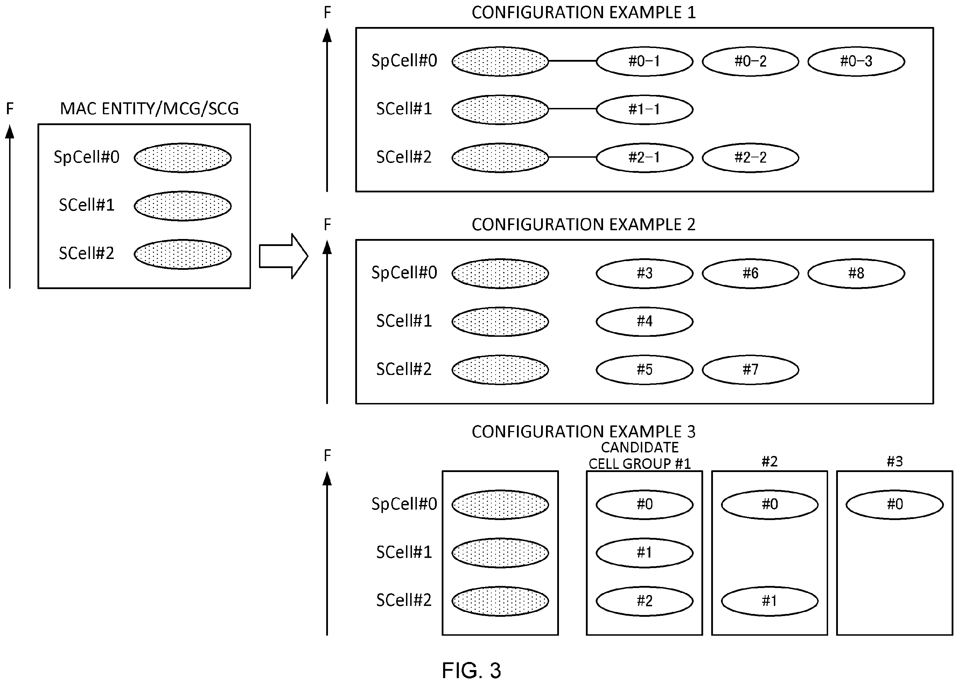

In configuration example 1, one or more candidate cells are associated with/configured for each of the serving cells (or a frequency domain corresponding to each of the serving cells) (see FIG. 3). Here, candidate cells #0-1, #0-2, and #0-3 are associated with SpCell #0 (or a frequency domain corresponding to SpCell #0), candidate cell #1-1 is associated with SCell #1 (or a frequency domain corresponding to SCell #1), and candidate cells #2-1 and #2-2 are associated with SCell #2 (or a frequency domain corresponding to SpCell #2). Information related to this association may be configured for/indicated to a UE by a base station by RRC/MAC CE/DCI.

### {Configuration Example 2}

In configuration example 2, candidate cells are associated with/configured for a MAC entity/MCG/SCG (see FIG. 3). Here, a case is shown where candidate cells #3 to #8 are associated with the MAC entity/MCG/SCG. In this case, instead of a candidate cell(s) being associated with each serving cell, the candidate cells are configured for the MAC entity or cell group (for example, an MCG/SCG). Information related to a candidate cell(s) to be configured for each cell may be configured for/indicated to a UE by a base station by RRC/MAC CE/DCI.

### {Configuration Example 3}

In configuration example 3, one or more candidate cell groups are configured (see FIG. 3). Each candidate cell group includes one or more candidate cells. Here, a case is shown where candidate cell group #1 including candidate cells #0 to #2, candidate cell group #2 including candidate cells #0 and #1, and candidate cell group #3 including candidate cell #0 are configured. At least one of information related to the configured candidate cell groups and information related to the candidate cell(s) included in each candidate cell group may be configured for/indicated to a UE by a base station by using RRC/MAC CE/DCI.

### {Serving Cell Switching}

In an existing system (for example, Rel. 17), L1 beam indication (for example, indication by a TCI state field of DCI) related to a TCI state for an additional PCI (or additional cell) is supported.

It is assumed, in Rel. 18 or later versions, that a new L1/L2 signal (for example, DCI/MAC CE) indicating switching of a serving cell (for example, serving cell switch) is supported. For such indication, it may be assumed that at least one of implicit indication and explicit indication is supported. The implicit indication may mean that a certain CORESET is updated to a TCI state associated with an additional PCI by a MAC CE, for example. The explicit indication may mean that cell switching is directly indicated by DCI/MAC CE.

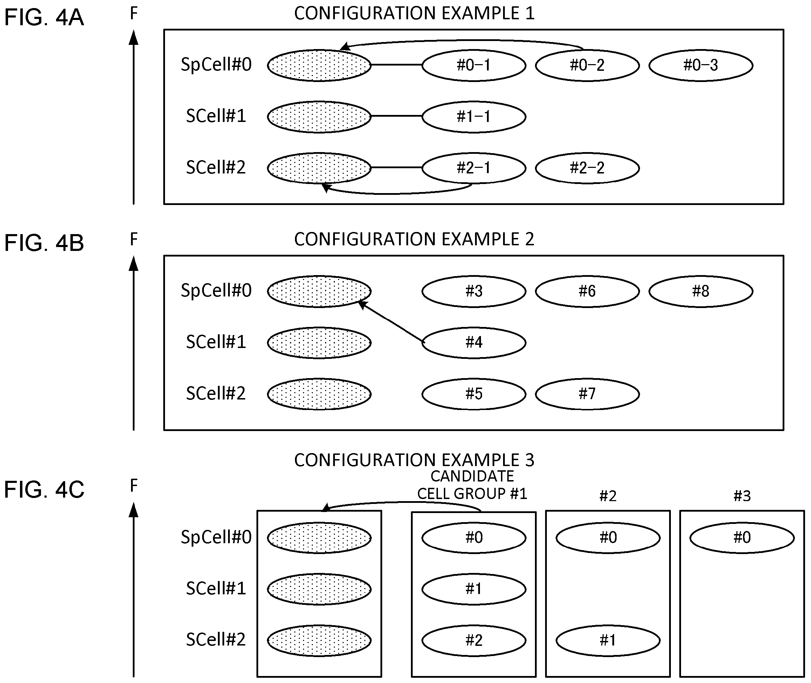

For example, in configuration example 1 of candidate cells, a certain candidate cell may be specified as a serving cell (or indicated for switching with a serving cell) via L1/L2 signaling. FIG. 4A shows a case where candidate cell #0-2 turns to be an SpCell of an MCG/SCG (SpCell #0 and candidate cell #0-2 are switched) by L1/L2 signaling. Also shown is a case where candidate cell #2-1 turns to be an SCell of the MCG/SCG (SCell #2 and candidate cell #2-1 are switched) by L1/L2 signaling.

Alternatively, in configuration example 2 of candidate cells, a certain candidate cell may be specified as a serving cell (or indicated for switching with a serving cell) via L1/L2 signaling. FIG. 4B shows a case where candidate cell #4 turns to be an SpCell of an MCG/SCG (SpCell #0 and candidate cell #4 are switched) by L1/L2 signaling.

Alternatively, in configuration example 3 of candidate cells, a certain candidate cell group (or one or more candidate cells included in the certain candidate cell group) may be changed/updated to a serving cell group via L1/L2 signaling. FIG. 4C shows a case where candidate cell group #1 (or candidate cells #0 to #2 included in candidate cell group #1) turns to be a serving cell group (or the serving cell group and candidate cell group #1 are switched) by L1/L2 signaling. Out of the candidate cells included in candidate cell group #1 (here, candidate cells #0 to #2), a candidate cell associated with SpCell #0 or a candidate cell configured in a frequency domain the same as that of SpCell #0 (here, candidate cell #0) may be configured as a new SpCell. Alternatively, a candidate cell to turn to be an SpCell may be indicated by L1/L2 signaling.

### (CSI Report Configuration)

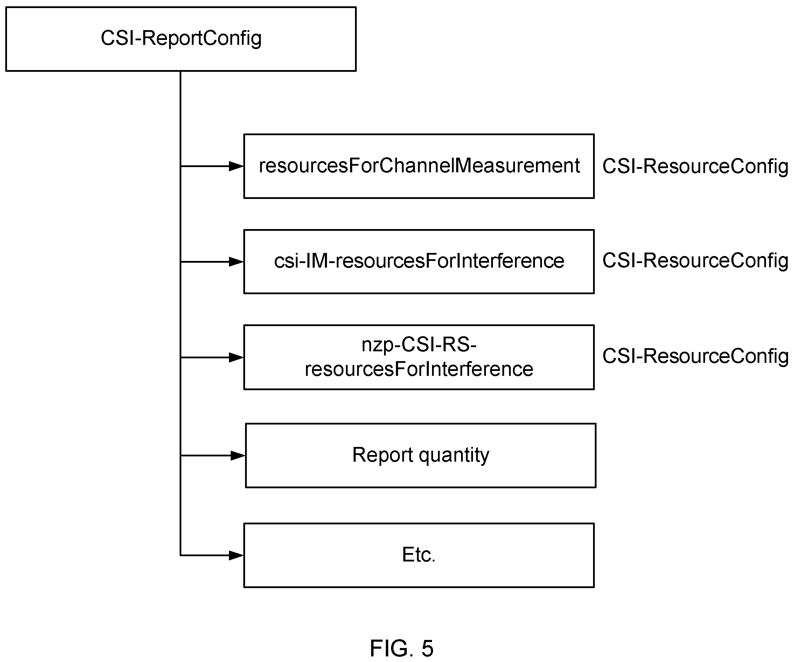

FIG. 5 is a diagram to show an overview of a CSI report configuration of RRC. FIG. 5 shows a CSI report configuration of RRC in 3GPP Rel. 17. As shown in FIG. 5, the CSI report configuration (CSI-ReportConfig) includes "resourcesForChannelMeasurement," "csi-IM-resourcesForInterference," "nzp-CSI-RS-resourcesForInterference," "Report quantity," and the like. Each of "resourcesForChannelMeasurement," "csi-IM-resourcesForInterference," and "nzp-CSI-RS-resourcesForInterference" corresponds to a CSI resource configuration "CSI-ResourceConfig."

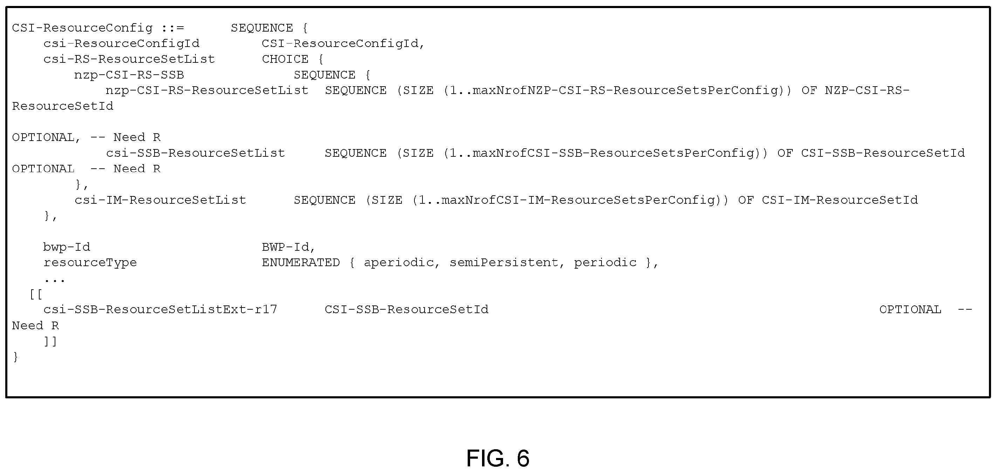

FIG. 6 is a diagram to show part of a CSI resource configuration in Rel. 17. As shown in FIG. 6, a CSI resource configuration (CSI-ResourceConfig) includes "csi-SSB-ResourceSetList." "csi-SSB-ResourceSetList" is a reference list for SSB resources to be used in CSI measuring and reporting, out of CSI-RS resource sets. "csi-SSB-ResourceSetListExt-r17" is used for addition of an element to "csi-SSB-ResourceSetList" when the number of reported groups (nrofReportedGroups-r17) is configured in the CSI report configuration.

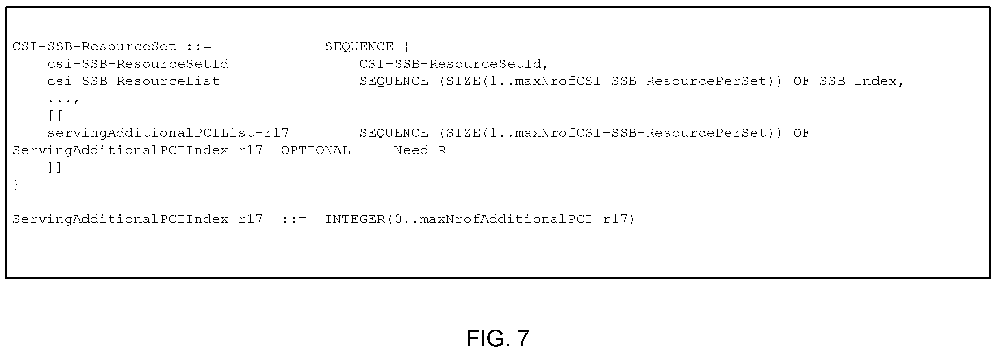

FIG. 7 is a diagram to show part of a CSI-SSB resource set in Rel. 17. As shown in FIG. 7, a CSI-SSB resource set (CSI-SSB-ResourceSet) includes "servingAdditionalPCIList-r17." "servingAdditionalPCIList-r17" indicates a physical cell ID (PCI) of an SSB included in csi-SSB-ResourceList. When this parameter is present, the list has entries as many as the number of pieces of csi-SSB-ResourceList. The first entry in the list indicates a PCI value for the first entry of csi-SSB-ResourceList, the second entry in the list indicates a PCI value for the second entry of csi-SSB-ResourceList, and this applies similarly to the following entries.

For each entry, when the value is zero, the PCI is a PCI of a serving cell that this CSI-SSB-ResourceSet is defined for. Otherwise (when each entry has a value other than zero), the value of the entry is additionalPCIIndex-r17 of SSB-MTC-AdditionalPCI-r17 in additionalPCIList-r17 of the serving cell configuration (ServingCellConfig), and the PCI is additionalPCI-r17 of this SSB-MTC-AdditionalPCI-r17.

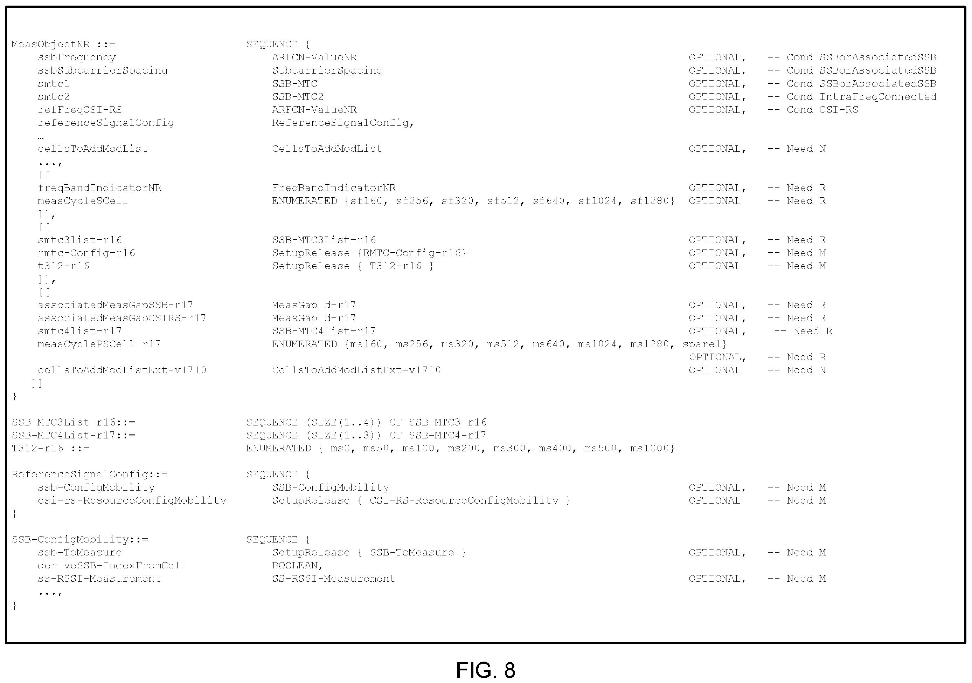

FIG. 8 is a diagram to show a configuration related to L3 measurement/reporting in Rel. 17. associatedMeasGapSSB-r17 indicates an associated measurement gap for SSB measurement identified by ssb-ConfigMobility of a measurement object. When a plurality of pieces of MeasObjectNR having the same SSB frequency are configured, a network configures, for each MeasObjectNR, the same measurement gap ID for this field. When this field is not present, the associated measurement gap is a gap configured via gapFR1, gapFR2, or gapUE.

associatedMeasGapCSIRS-r17 indicates an associated measurement gap for CSI-RS measurement identified by csi-rs-ResourceConfigMobility of a measurement object. When this field is not present, the associated measurement gap is a gap configured via gapFR1, gapFR2, or gapUE.

### <Reinforcement of L1 Measurement Report for L1/L2 Inter-cell Mobility>

When RSs (mainly, SSBs) of a serving cell and non-serving cell are configured in an identical CSI report configuration (or in an identical CSI resource configuration), a UE may report, in addition to an existing report content, some indicators indicating the serving/non-serving cell.

When a new RRC parameter is configured, the UE may report, in addition to an SSB index/CRI and an L1-RSRP (Reference Signal Received Power)/L1-SINR (Signal to Interference plus Noise Ratio) value, an L3-RSRP value (per beam/cell/multi-beam).

### <Event-triggered L1 Beam Reporting for L1/L2 Inter-cell Mobility>

With one or a plurality of existing events for RRM in TS38.331 reused, aperiodic L1 beam reporting may be triggered. In order to trigger aperiodic L1 beam reporting, one or a plurality of new/separate events may be defined. With any combination of two or more events as a trigger, L1 beam reporting may be performed. Each event may be any one of events A2 to A6 and I1 below. In events A2 to A6, a measurement result may be a measurement result of at least one of RSRP (L1-RSRP/L3-RSRP), RSRQ, and SINR (RS-SINR).

Event A2: A measurement result of a serving cell is worse than a threshold.

Event A3: A measurement result (a value obtained by adding an offset to the measurement result) of a neighbour cell is better than a measurement result (a value obtained by adding an offset to the measurement result) of an SpCell.

Event A4: A measurement result (a value obtained by adding an offset to the measurement result) of a neighbour cell is better than a threshold.

Event A5: A measurement result of an SpCell is worse than a first threshold and a measurement result (a value obtained by adding an offset to the measurement result) of a neighbour cell is better than a second threshold.

Event A6: A measurement result (a value obtained by adding an offset to the measurement result) of a neighbour cell is better than a measurement result (a value obtained by adding an offset to the measurement result) of a serving cell (Secondary Cell (SCell)).

Event I1: A measurement result of interference is higher than a threshold.

As described above, in L1/L2 inter-cell mobility (for example, switch/switching from a serving cell to a candidate cell (or additional cell/target cell)), it is assumed, when a candidate cell is configured/applied/supported, that L1 beam measurement/reporting (or CSI measurement/reporting) for the candidate cell/serving cell is performed. For such a case, however, studies have not sufficiently been made on how to control configuration/operation or the like of L1 beam measurement/reporting (or CSI measurement/reporting). Unless L1 beam measurement/reporting (or CSI measurement/reporting) for the candidate cell/serving cell is performed appropriately, the communication quality may be degraded.

The inventors of the present invention focused on inter-cell mobility (for example, cell switching) in a case where a candidate cell (or additional cell, target cell) is configured/supported, studied on L1 beam measurement/reporting (or CSI measurement/reporting) for the candidate cell/serving cell, and came up with the idea of the present embodiment.

Embodiments according to the present disclosure will be described in detail with reference to the drawings as follows. Note that the aspects (for example, cases) below may each be employed individually, or may be employed in combination of at least two.

In the present disclosure, "A/B" and "at least one of A and B" may be interchangeably interpreted. In the present disclosure, "A/B/C" may mean "at least one of A, B, and C."

In the present disclosure, activate, deactivate, indicate, select, configure, update, determine, and the like may be interchangeably interpreted. In the present disclosure, "support," "control," "controllable," "operate," "operable," and the like may be interchangeably interpreted.

In the present disclosure, radio resource control (RRC), an RRC parameter, an RRC message, a higher layer parameter, an information element (IE), a configuration, and the like may be interchangeably interpreted. In the present disclosure, a Medium Access Control control element (MAC Control Element (CE)), an update command, an activation/deactivation command, and the like may be interchangeably interpreted.

In the present disclosure, the higher layer signaling may be, for example, any one or combinations of Radio Resource Control (RRC) signaling, Medium Access Control (MAC) signaling, broadcast information, and the like.

In the present disclosure, the MAC signaling may use, for example, a MAC control element (MAC CE), a MAC Protocol Data Unit (PDU), or the like. The broadcast information may be, for example, a master information block (MIB), a system information block (SIB), minimum system information (Remaining Minimum System Information (RMSI)), other system information (OSI), or the like.

In the present disclosure, physical layer signaling may be, for example, downlink control information (DCI), uplink control information (UCI), or the like.

In the present disclosure, an index, an identifier (ID), an indicator, a resource ID, and the like may be interchangeably interpreted. In the present disclosure, a sequence, a list, a set, a group, a cluster, a subset, and the like may be interchangeably interpreted.

In the present disclosure, a panel, a UE panel, a panel group, a beam, a beam group, a precoder, an Uplink (UL) transmission entity, a transmission/reception point (TRP), a base station, spatial relation information (SRI), a spatial relation, an SRS resource indicator (SRI), a control resource set (CORESET), a Physical Downlink Shared Channel (PDSCH), a codeword (CW), a transport block (TB), a reference signal (RS), an antenna port (for example, a demodulation reference signal (DMRS) port), an antenna port group (for example, a DMRS port group), a group (for example, a spatial relation group, a code division multiplexing (CDM) group, a reference signal group, a CORESET group, a Physical Uplink Control Channel (PUCCH) group, a PUCCH resource group), a resource (for example, a reference signal resource, an SRS resource), a resource set (for example, a reference signal resource set), a CORESET pool, a downlink Transmission Configuration Indication state (TCI state) (DL TCI state), an uplink TCI state (UL TCI state), a unified TCI state, a common TCI state, quasi-co-location (QCL), QCL assumption, and the like may be interchangeably interpreted.

A spatial relation information Identifier (ID) (TCI state ID) and spatial relation information (TCI state) may be interchangeably interpreted. "Spatial relation information" may be interchangeably interpreted as "a set of spatial relation information", "one or a plurality of pieces of spatial relation information", and the like. The TCI state and the TCI may be interchangeably interpreted.

In the following embodiments, a "plurality of" and "two" may be interchangeably interpreted. A "TAG" and a "TAG ID" may be interchangeably interpreted. A "cell," a "CC," and a "carrier" may be interchangeably interpreted.

The following description may be applied in inter-cell mobility (for example, L1/L2 inter cell mobility) or may be applied in communication control other than inter-cell mobility. L1/L2 inter-cell mobility may be interpreted as at least one of cell switching, cell switch, and cell change.

### (Radio Communication Method)

### <First Embodiment>

A first embodiment describes an example of a CSI resource configuration (CSI-ResourceConfig)/CSI report configuration (CSI-ReportConfig) in a case where L1 beam measurement/report (for example, L1 beam measurement/reporting) for a cell(s) in one or a plurality of frequencies is supported.

In the present disclosure, L1 beam measurement/reporting may be interpreted as CSI measurement/reporting. In the present disclosure, L1 beam measurement/reporting (or CSI measurement/reporting) may be interpreted as one of L1 beam measurement (or CSI measurement), one of L1 beam reporting (or CSI reporting), or both L1 beam measurement and reporting (or CSI measurement and reporting). In the present disclosure, a cell may be applied only to a candidate cell, may be applied only to a serving cell, or may be applied to both a candidate cell and a serving cell.

In the present disclosure, a cell may be interpreted as a PCI. For example, an L1 beam report may include at least one of: L1-RSRP/L1-SINR associated with one or a plurality of PCIs (for example, serving cell PCIs/additional PCIs), L1-RSRP/L1-SINR associated with one or a plurality of frequencies (for example, serving cell frequencies/different frequencies), and L1-RSRP/L1-SINR associated with one or a plurality of CCs.

In inter-cell mobility, in order to support SpCell/SCell switching to a candidate cell (or additional cell, target cell) in any frequency, L1 beam measurement in a plurality of frequencies (inter-frequency measurement) may be supported. L1 beam measurement/reporting (or CSI measurement/reporting) for a plurality of frequencies (or frequency domains) may include at least one of Layer-1 Reference Signal Received Power (L1-RSRP) and Layer-1 Signal to Interference plus Noise Ratio (L1-SINR).

A UE may receive information related to a CSI resource configuration/CSI report configuration for one or more candidate cells corresponding to different frequencies and perform, based on the information, CSI reporting/beam reporting including at least one of L1-RSRP and L1-SINR of each of the candidate cells.

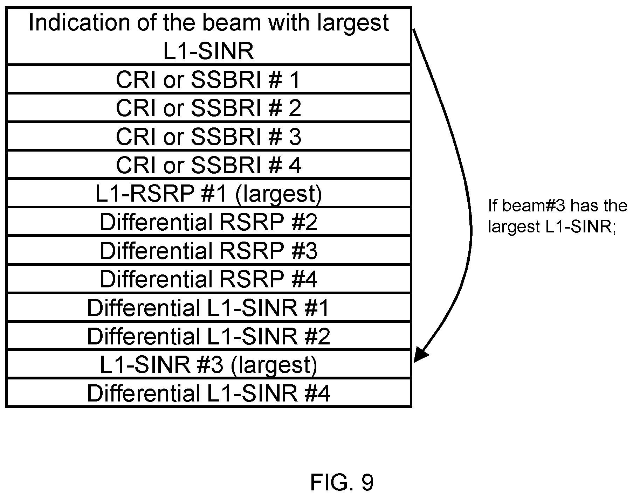

For example, the UE may perform, for a certain cell (for example, a candidate cell) or a certain frequency (for example, a frequency corresponding to the candidate cell), CSI reporting including either one of L1-RSRP or L1-SINR, or both L1-RSRP and L1-SINR (see FIG. 9). FIG. 9 shows an example of a case where a certain CSI report (for example, CSI report #n) includes both L1-RSRP and L1-SINR.

In FIG. 9, the CSI report includes an absolute value of the largest L1-RSRP (L1-RSRP #1) and differential values from the absolute value (Differential RSRP #2, Differential RSRP #3, and Differential RSRP #4). The CSI report includes an absolute value of the largest L1-SINR (L1-SINR #3) and differential values from the absolute value (Differential RSRP #1, Differential RSRP #2, and Differential RSRP #4). The CSI report may include a field (here, the head (first line)) indicating the largest L1-SINR. Here, a case is shown where L1-SINR #3 (or beam #3) is indicated as a beam with the largest L1-SINR. In the present disclosure, a beam may be interpreted as a reference signal resource index (for example, CRI (CSI-RS Resource Indicator)/SSBRI (SS/PBCH Block Resource Indicator)).

A beam selection rule (or a rule of selecting CSI to be reported) may be defined in advance in a specification or may be configured by RRC signaling. Beam selection (or selection of CSI to be reported) may be performed based on both L1-RSRP and L1-SINR.

In a case of measuring RSs in a plurality of frequencies and selecting a beam to be reported, the UE may first compare respective ones of L1-RSRP for cells in the frequencies (or L1-RSRP in the same frequency) and then compare respective ones of L1-SINR for cells in different frequencies (L1-SINR of cells cross frequencies). Alternatively, the UE may first compare respective ones of L1-SINR for cells in different frequencies and then compare L1-RSRP in the same frequency.

The UE may perform beam selection (or selection of CSI to be reported), based on a certain higher layer parameter. The certain higher layer parameter may be, for example, a report quantity (for example, reportQuantity) included in a CSI report configuration (for example, CSI-ReportConfig). Meanwhile, when either one of L1-RSRP or L1-SINR is configured by a certain higher layer parameter, the UE may control such that the configured one is included in the CSI report and the other one is not included in the CSI report.

For example, the UE may determine beam selection (or CSI to be reported), based on at least one of Option 1-1 to Option 1-3 below.

### {Option 1-1}

In order to enable reporting of both L1-RSRP and L1-SINR for a beam index (or CSI index), configuration of both L1-RSRP and L1-SINR by a certain higher layer parameter (for example, reportQuantity) may be supported.

For example, when both L1-RSRP and L1-SINR are configured by the certain higher layer parameter, the UE report CSI including the L1-RSRP and L1-SINR.

Alternatively, even in a case where both L1-RSRP and L1-SINR are configured, when a certain condition is met, a report quantity for CSI may be reduced (or certain CSI reporting need not be performed). CSI reporting overhead may be reduced based on at least one of Option 1-1A and Option 1-1B below.

### <<Option 1-1A>>

The UE may determine a report content (or a measurement result to be included in CSI), based on at least one of a measurement result of L1-RSRP and a measurement result of L1-SINR. For example, the UE may determine whether to report both L1-RSRP and L1-SINR (or to report either one of them), based on at least one of the measurement result of L1-RSRP and the measurement result of L1-SINR. In a case of reporting only one of L1-RSRP or L1-SINR, the UE may determine, based on the measurement result of L1-RSRP and the measurement result of L1-SINR, which measurement result to report.

Alternatively, the UE may include, in CSI, one of the measurement results (for example, L1-RSRP) all the time, and determine whether to report the other one of the measurement results (for example, L1-SINR) on the basis of at least one of the measurement result of L1-RSRP and the measurement result of L1-SINR.

The UE may indicate a measurement result to report. For example, in a case of reporting only one of L1-RSRP or L1-SINR, the UE may indicate which measurement result to report. For example, by using a certain field included in CSI, the measurement result to be reported may be indicated.

### <<Option 1-1B>>

The UE may report both L1-RSRP and L1-SINR for a specific beam/cell, and report only one of L1-RSRP or L1-SINR for another beam/cell (or the rest beams/cells). In the present disclosure, the specific beam/cell may be a best beam/cell, a beam/cell with the highest quality, a beam/cell with the highest L1-RSRS, or a beam/cell with the highest L1-SINR. A beam may be a reference signal resource index (for example, CRI/SSBRI).

In Option 1-1A/Option 1-1B, in a case of selecting (or reporting) both/only one of L1-RSRP and L1-SINR, the UE may autonomously determine a report content or the report content may be determined based on a certain rule. The certain rule may be, for example, a rule to report a measurement result exceeding a threshold configured/defined for L1-RSRP and a threshold configured/defined for L1-SINR. The L1-RSRP threshold/L1-SINR threshold may be separately configured by higher layer signaling.

As described above, even when reporting of both L1-RSRP and L1-SINR is configured/defined, allowing/supporting reporting of only one of L1-RSRP or L1-SINR on the basis of a certain condition enables an increase in CSI reporting overhead to be suppressed.

### {Option 1-2}

With a certain higher layer parameter (for example, reportQuantity)/DCI, configuration/indication of only one of L1-RSRP or L1-SINR may be supported. The UE controls to report a configured/indicated measurement result (either one of L1-RSRP or L1-SINR).

### {Option 1-3}

With a certain higher layer parameter (for example, reportQuantity)/DCI, configuration/indication of only one of L1-RSRP or L1-SINR may be supported. The UE may report both L1-RSRP and L1-SINR for a specific beam/cell, and report, for another beam/cell (or the rest beams/cells), a measurement result (only one of L1-RSRP or L1-SINR) configured/indicated by the higher layer parameter/DCI.

The UE may autonomously determine the specific cell, or the specific cell may be configured by a higher layer parameter. Alternatively, when a measurement result of CSI reporting (L1-RSRP or L1-SINR) not configured by a higher layer exceeds a threshold defined/configured in advance, the CSI reporting not configured may be performed.

As described above, even when reporting of only one of L1-RSRP or L1-SINR is configured/defined, allowing/supporting reporting of both L1-RSRP and L1-SINR for the specific cell enables detailed CSI reporting on the specific beam/cell to be performed.

### {UE Capability}

In a case where L1 beam (or CSI) measurement/reporting for cells in a plurality of frequencies is supported with use of a CSI resource configuration (CSI-ResourceConfig)/CSI report configuration (CSI-ReportConfig), a UE capability related to the number of cells (or the number of beams, the number of pieces of CSI) to be configured/reported may be introduced. For example, a UE capability related to the number of cells (or the number of beams, the number of pieces of CSI) to be configured/reported per CSI resource configuration/per CSI report configuration/per frequency may be supported. Alternatively, a UE capability related to the number of cells (or the number of beams, the number of pieces of CSI) to be configured/reported over CSI resource configurations/CSI report configurations/frequencies may be supported.

### <Second Embodiment>

A second embodiment describes another example of the CSI resource configuration (CSI-ResourceConfig)/CSI report configuration (CSI-ReportConfig) in a case where L1 beam measurement/report (for example, L1 beam measurement/reporting) for a cell(s) in one or a plurality of frequencies is supported. The second embodiment may be combined with the first embodiment for application.

In a case where L1 beam measurement/reporting for a cell in a certain frequency is supported with use of a CSI resource configuration (CSI-ResourceConfig)/CSI report configuration (CSI-ReportConfig), the CSI resource configuration/CSI report configuration may include information related to a frequency (for example, frequency configuration). L1 beam measurement/reporting may be interpreted as CSI measurement/reporting.

The frequency configuration may be a frequency configuration (for example, absolute radio frequency channel number (Absolute radio-frequency channel number (ARFCN)-ValueNR)) corresponding to a reference signal for measurement (for example, SSB/CSI-RS). ARFCN-ValueNR is used for indication of an ARFCN to be applied to a downlink, uplink, or bidirectional (TDD) NR global frequency raster. Each CSI report configuration/CSI resource configuration corresponds to one frequency. In order to support L1 beam measurement/reporting in a plurality of frequencies, a plurality of CSI report configurations are required. In a case where no ARFCN-ValueNR is present in a CSI report configuration, this may mean to correspond to a frequency the same as that of a current serving cell configuration.

A frequency configuration indicating a frequency for CSI measurement/reporting and a report quantity (for example, reportQuantity) indicating a CSI measurement/reporting content (for example, L1-RSRP, L1-SINR) may be configured for a UE. For configuration/reporting of the report quantity, a configuration shown in the first embodiment may be applied.

For example, a frequency configuration and a report quantity (for example, reportQuantity) may be included in one CSI report configuration (or each CSI report configuration). A configuration may be supported where measurement/reporting of both L1-RSRP and L1-SINR is configured for a certain cell (or frequency) and measurement/reporting of only one of L1-RSRP or L1-SINR is configured for another cell (or frequency). The UE controls CSI measurement/CSI reporting, based on a frequency configuration and a report quantity (for example, reportQuantity).

For example, the UE may determine beam selection (or CSI to be reported), based on at least one of Option 2-1 to Option 2-3 below.

### {Option 2-1}

In order to enable reporting of both L1-RSRP and L1-SINR for a beam index (or CSI index) of a certain cell (or certain frequency), configuration of both L1-RSRP and L1-SINR by a certain higher layer parameter (for example, reportQuantity) may be supported.

For example, when, with a certain higher layer parameter (for example, a frequency configuration and a report quantity (for example, reportQuantity)), both L1-RSRP and L1-SINR are configured for a certain cell or frequency, the UE reports CSI including L1-RSRP and L1-SINR corresponding to the frequency.

Alternatively, when a certain condition is met, the report quantity of CSI may be reduced (or certain CSI reporting need not be performed). CSI reporting overhead may be reduced based on at least one of Option 2-1A and Option 2-1B below.

### <<Option 2-1A>>

The UE may determine a report content (or a measurement result to be included in CSI), based on at least one of a measurement result of L1-RSRP and a measurement result of L1-SINR. For example, the UE may determine whether to report both L1-RSRP and L1-SINR, based on at least one of the measurement result of L1-RSRP and the measurement result of L1-SINR. In a case of reporting only one of L1-RSRP or L1-SINR, the UE may determine, based on the measurement result of L1-RSRP and the measurement result of L1-SINR, which measurement result to report.

Alternatively, the UE may include, in CSI, one of the measurement results (for example, L1-RSRP) all the time, and determine whether to report the other one of the measurement results (for example, L1-SINR) on the basis of at least one of the measurement result of L1-RSRP and the measurement result of L1-SINR.

The UE may indicate a measurement result to report. For example, in a case of reporting only one of L1-RSRP or L1-SINR, the UE may indicate which measurement result to report. For example, by using a certain field included in CSI, the measurement result to be reported may be indicated.

### <<Option 2-1B>>

The UE may report both L1-RSRP and L1-SINR for a specific beam/cell, and report only one of L1-RSRP or L1-SINR for another beam/cell (or the rest beams/cells). In the present disclosure, the specific beam/cell may be a best beam/cell, a beam/cell with the highest quality, a beam/cell with the highest L1-RSRS, or a beam/cell with the highest L1-SINR.

In Option 2-1A/Option 2-1B, in a case of selecting (or reporting) both/only one of L1-RSRP and L1-SINR, the UE may autonomously determine a report content or the report content may be determined based on a certain rule. The certain rule may be, for example, a rule to report a measurement result exceeding a threshold configured/defined for L1-RSRP and a threshold configured/defined for L1-SINR. The L1-RSRP threshold/L1-SINR threshold may be separately configured by higher layer signaling.

As described above, even when reporting of both L1-RSRP and L1-SINR is configured/defined, allowing/supporting reporting of only one of L1-RSRP or L1-SINR on the basis of a certain condition enables an increase in CSI reporting overhead to be suppressed.

### {Option 2-2}

With a certain higher layer parameter (for example, a frequency configuration and a report quantity (for example, reportQuantity))/DCI, configuration/indication of only one of L1-RSRP or L1-SINR for a certain cell or frequency may be supported. The UE controls to report a configured/indicated measurement result (either one of L1-RSRP or L1-SINR).

### {Option 2-3}

With a certain higher layer parameter (for example, a frequency configuration and a report quantity (for example, reportQuantity))/DCI, configuration/indication of only one of L1-RSRP or L1-SINR for a certain cell or frequency may be supported. The UE may report both L1-RSRP and L1-SINR for a specific beam/cell/frequency, and report, for another beam/cell/frequency (or the rest beams/cells/frequencies), a measurement result (only one of L1-RSRP or L1-SINR) configured/indicated by the higher layer parameter/DCI.

The UE may autonomously determine the specific cell, or the specific cell may be configured by a higher layer parameter. Alternatively, when a measurement result of CSI reporting (L1-RSRP or L1-SINR) not configured by a higher layer exceeds a threshold defined/configured in advance, the CSI reporting not configured may be performed.

As described above, even when reporting of only one of L1-RSRP or L1-SINR is configured/defined, allowing/supporting reporting of both L1-RSRP and L1-SINR for the specific cell enables detailed CSI reporting on the specific beam/cell to be performed.

### {UE Capability}

In a case where L1 beam (or CSI) measurement/reporting for cells in a plurality of frequencies is supported with use of a CSI resource configuration (CSI-ResourceConfig)/CSI report configuration (CSI-ReportConfig), a UE capability related to the number of cells (or the number of beams, the number of pieces of CSI) to be configured/reported may be introduced. For example, a UE capability related to the number of cells (or the number of beams, the number of pieces of CSI) to be configured/reported per CSI resource configuration/per CSI report configuration/per frequency may be supported. Alternatively, a UE capability related to the number of cells (or the number of beams, the number of pieces of CSI) to be configured/reported over CSI resource configurations/CSI report configurations/frequencies may be supported.

### <Third Embodiment>

A third embodiment describes an example of a relationship between a candidate cell configured by a higher layer parameter and a candidate cell or parameter configured/activated by another higher layer parameter or MAC CE.

For L1/L2 inter-cell mobility, candidate cell configurations (for example, candidate cell's configurations) are configured by RRC (for example, a first RRC parameter). Here, candidate cells configured by the first RRC parameter are referred to as candidate cell set #A (for example, Candidate cells set A). Candidate cell set #A may include a serving cell and a candidate cell or may include a candidate cell(s) (candidate cell(s) corresponding to one or more serving cells) only. In the present disclosure, a candidate cell set may be interpreted as a set, a cell set, a list, a cell list, a candidate cell list, or a cell combination.

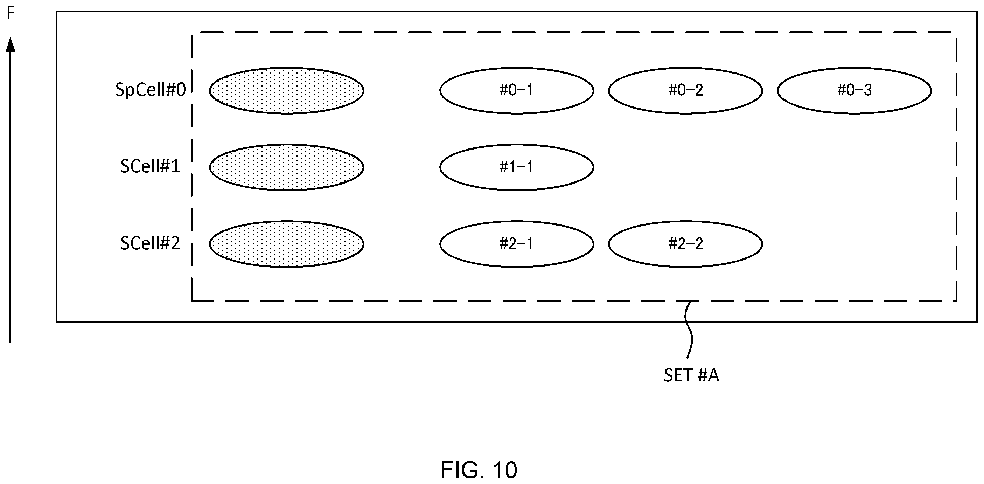

FIG. 10 shows an example of a correspondence relationship between serving cells and candidate cells. Here, a case is shown where SpCell #0 and candidate cells #0-1, #0-2, and #0-3 are configured for a first frequency, SCell #1 and candidate cell #1-1 are configured for a second frequency, and SCell #2 and candidate cells #2-1 and #2-2 are configured for a third frequency, by first RRC (or first RRC parameter/information element). As the first RRC parameter, one or a plurality of RRC parameters/information elements may be indicated to a UE. For example, the first RRC parameter may be notified per serving cell/per frequency.

For a candidate cell and serving cell, L1 beam measurement/reporting (or CSI measurement/reporting) is configured by RRC (for example, a second RRC parameter). Here, candidate cells configured by the second RRC parameter are referred to as candidate cell set #B (for example, Candidate cells set B). A base station may control transmission of L1/L2 cell switching indication signaling (for example, DCI/MAC CE) indicating cell switching, based on L1 beam reporting (or CSI reporting) from a UE. In this case, L1/L2 inter-cell mobility (for example, switching from a serving cell to a candidate cell) may be performed within a range of candidate cell set #B (or a destination candidate cell for the switching may be selected from candidate cells included in candidate cell set #B).

A TCI state associated with a serving cell PCI/candidate cell PCI (candidate cell PCI in a frequency the same as/different from that for the serving cell PCI) is activated by a MAC CE. Here, candidate cells activated by the MAC CE are referred to as candidate cell set #C (for example, Candidate cells set C).

In a case where only intra-frequency mobility is supported (or where inter-frequency mobility is not applied), serving cells/candidate cells corresponding to the same frequency may be included in the same candidate cell set. For example, SpCell #0 and candidate cells #0-0 and #0-2 may be included in the same candidate cell set (for example, candidate cell set #E).

As described above, in a case where candidate cells (for example, candidate cell set #A) are configured for L1/L2 inter-cell mobility, it is required to appropriately control a relationship between the cells configured for L1/L2 inter-cell mobility (for example, candidate cell set #A) and candidate cells configured for L1 beam measurement/reporting (for example, candidate cell set #B).

Alternatively, it is required to appropriately control a relationship between the cells configured for L1/L2 inter-cell mobility (for example, candidate cell set #A) or the candidate cells configured for L1 beam measurement/reporting (for example, candidate cell set #B) and candidate cells associated with a TCI state activated by a MAC CE (for example, candidate cell set #C).

A relationship of candidate cell set #A (hereinafter, also referred to as set #A)/candidate cell set #B (hereinafter, also referred to as set #B)/candidate cell set #C (hereinafter, also referred to as set #C) may be defined/configured based on at least one of Option 3-1 to Option 3-4.

### {Option 3-1}

Any cell in set #A is configured in set #B. In other words, a cell (a candidate cell/serving cell) configured in set #B may be selected from cells (candidate cells/serving cells) included in set #A (set #B ∈ set #A).

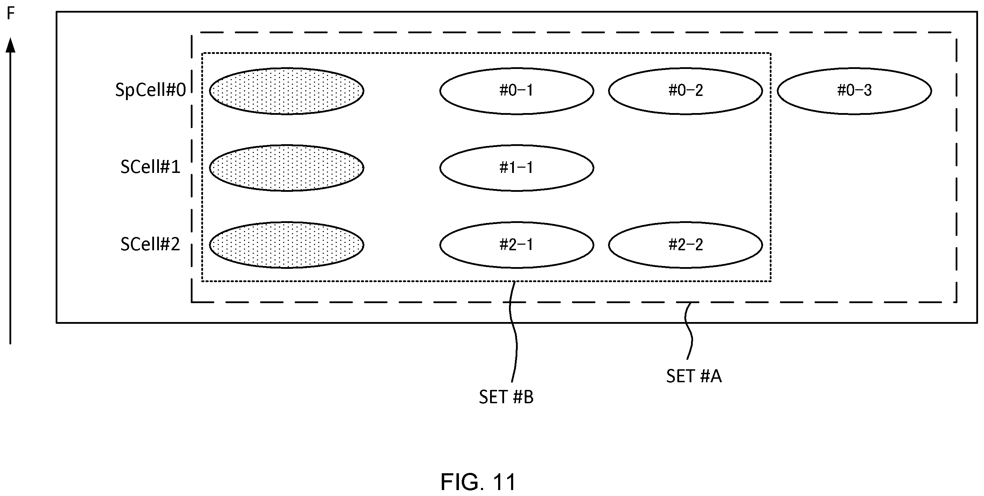

FIG. 11 shows an example of cells included in set #A and cells included in set #B. Here, a case is shown where set #A includes SpCell #0, candidate cells #0-1, #0-2, and #0-3, SCell #1, candidate cell #1-1, SCell #2, and candidate cells #2-1 and #2-2. A case is shown where set #B includes SpCell #0, candidate cells #0-1, #0-2, and #0-3, SCell #1, candidate cell #1-1, SCell #2, and candidate cells #2-1 and #2-2. Note that set #A/set #B may include candidate cells only (or include no serving cell).

Set #A (or candidate cells included in set #A) may be configured by a higher layer parameter (for example, candidate cell configuration) related to candidate cell configuration. Set #B (or candidate cells included in set #B) may be configured by a higher layer parameter (for example, L1 beam measurement/reporting, CSI-ReportConfig) related to L1 beam measurement/reporting or CSI measurement/reporting.

In this case, L1/L2 inter-cell mobility (for example, switching from a serving cell to a candidate cell) may be performed within a range of set #B. When cell switching is indicated by DCI/MAC CE, a UE may assume that a destination candidate cell for the switching is selected from the candidate cells included in set #B.

Alternatively, any cell in set #B may be configured in set #A. In other words, a cell (a candidate cell/serving cell) configured in set #A may be selected from cells (candidate cells/serving cells) included in set #B (set #A ∈ set #B). In this case, it is possible to recognize a channel state of a different cell (for example, non-serving cell) other than a candidate cell (for example, a destination candidate cell for the switching) that L1/L2 inter-cell mobility is applied to. Based on a result of the channel state of the different cell, reconfiguration of a candidate cell that L1/L2 inter-cell mobility is applied to can be performed appropriately.

### {Option 3-2}

A MAC CE that indicates/controls activation/deactivation of a candidate cell is introduced. When a candidate cell included in set #A is activated/deactivated by the MAC CE, this may be applied to/configured for set #B or this may not be applied to/configured for set #B. In the present disclosure, deactivation may be interpreted as disablement or dormancy.

For example, when a candidate cell included in set #A is deactivated, at least one of Option 3-2A to Option 3-2D below may be applied.

### <<Option 3-2A>>

When a candidate cell included in set #A is deactivated, the deactivated candidate cell may be configured for set #B (or configuration in set #B may be supported). In other words, even when a candidate cell is deactivated as a candidate cell for L1/L2 inter-cell mobility, for the deactivated candidate cell, L1 beam measurement/reporting (or CSI measurement/reporting) may be configured.

### <<Option 3-2B>>

When a candidate cell included in set #A is deactivated, the deactivated candidate cell is not configured for set #B (or configuration in set #B is not supported). In other words, when a candidate cell is deactivated as a candidate cell for L1/L2 inter-cell mobility, for the deactivated candidate cell, L1 beam measurement/reporting (or CSI measurement/reporting) may not be configured.

### <<Option 3-2C>>

When a candidate cell included in set #A is deactivated, for the deactivated candidate cell, a UE may ignore L1 beam measurement/reporting (or CSI measurement/reporting). Alternatively, for the deactivated candidate cell, the UE need not be requested for L1 beam measurement/reporting (or CSI measurement/reporting).

For example, when a candidate cell included in set #A is deactivated and, for the deactivated candidate cell, a higher layer parameter related to L1 beam measurement/reporting (or CSI measurement/reporting) is configured, the UE may ignore measurement/reporting for the candidate cell (or the UE need not be requested for such measurement/reporting). When a candidate cell included in set #A is activated and, for the activated candidate cell, a higher layer parameter related to L1 beam measurement/reporting (or CSI measurement/reporting) is configured (for example, the higher layer parameter is deactivated and then activated), the UE may resume measurement/reporting for the activated candidate cell on the basis of a condition configured by the higher layer parameter.

### <<Option 3-2D>>

When a candidate cell included in set #A is deactivated, for the deactivated candidate cell (for example, a candidate cell configured with L1 beam measurement/reporting), a UE may ignore an L1 measurement operation of a CSI report configuration (for example, CSI-ReportConfig) including the candidate cell. Alternatively, for the deactivated candidate cell, the UE need not be requested for any L1 measurement operation of a CSI report configuration (for example, CSI-ReportConfig) including the candidate cell.

### <<Variations>>

At least one of Option 3-2A to Option 3-2D may be applied to a serving cell. For example, for a deactivated serving cell or a former serving cell after switching (for example, original serving cell), a UE may ignore L1 measurement/reporting (or L1 measurement/reporting need not be requested).

### <<UE Capability>>

A UE capability may be introduced that indicates support of a MAC CE (for example, new MAC CE) indicating activation/deactivation of a candidate cell. A UE capability may be introduced that indicates whether to support L1 beam measurement/reporting of a deactivated serving cell/candidate cell.

### {Option 3-3}

A cell or cell set that cell switching is applied to/supported for may be supported separately. Here, a set including cells that cell switching is applied to/supported for is referred to as set #M (or candidate cell set #M). Set #M may be configured by a higher layer parameter or may be acquired/selected from a certain cell set. Set #M may include only candidate cells that cell switching can be applied to or may include serving cells and candidate cells that cell switching can be applied to.

A base station may indicate, to a UE, a candidate cell included in set #M as a destination candidate cell for switching. In L1/L2 inter-cell mobility, the UE may assume that a destination candidate cell for switching is indicated from among set #M.

Any cell in set #M may be acquired/selected from set #B. In other words, a cell (a candidate cell/serving cell) configured in set #M may be selected from cells (candidate cells/serving cells) included in set #B (set #M ∈ set #B). With this, only candidate cells configured with L1 beam measurement/reporting (or CSI measurement/reporting) are configured as cells to be candidates for cell switching.

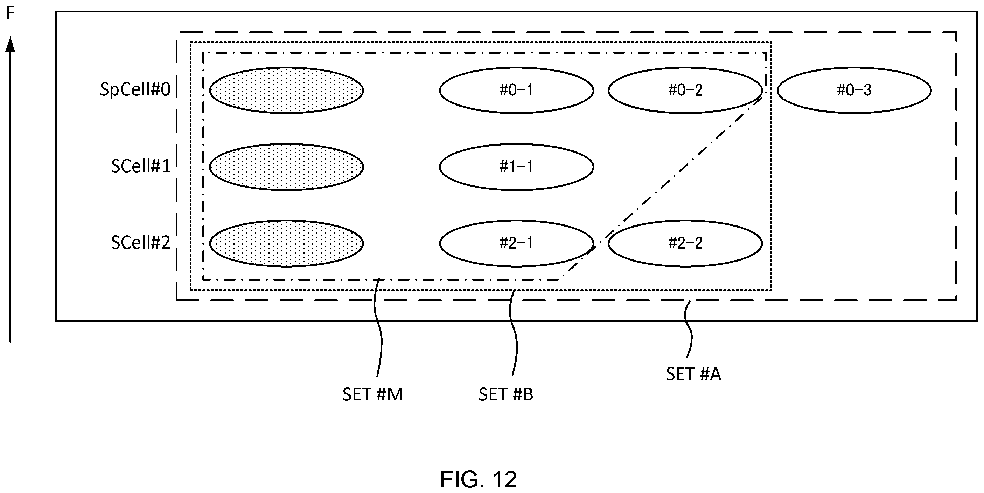

FIG. 12 shows an example of cells included in set #A, cells included in set #B, and cells included in set #M. Here, a case is shown where set #A includes SpCell #0, candidate cells #0-1, #0-2, and #0-3, SCell #1, candidate cell #1-1, SCell #2, and candidate cells #2-1 and #2-2. A case is shown where set #B includes SpCell #0, candidate cells #0-1 and #0-2, SCell #1, candidate cell #1-1, SCell #2, and candidate cells #2-1 and #2-2. A case is shown where set #M includes SpCell #0, candidate cells #0-1 and #0-2, SCell #1, candidate cell #1-1, SCell #2, and candidate cell #2-1. Note that set #A/set #B/set #M may include candidate cells only (or include no serving cell).

Alternatively, any cell in set #B may be acquired/selected from set #M. In other words, a cell (a candidate cell/serving cell) configured in set #B may be selected from cells (candidate cells/serving cells) included in set #M (set #B ∈ set #M).

### {Option 3-4}

Any cell in set #B is configured in set #C. In other words, a cell (a candidate cell/serving cell) configured in set #C may be selected from cells (candidate cells/serving cells) included in set #B (set #C ∈ set #B).

Set #C (or candidate cells included in set #C) may be a set (or candidate cells) having a TCI state activated by a MAC CE.

### <<Option 3-4A>>

A cell indicated by L1/L2 signaling (for example, DCI/MAC CE) to be used for cell switching may be or may not be associated with a TCI state activated. In other words, a cell indicated by L1/L2 signaling to be used for cell switching may be selected, irrespective of configuration of a TCI state activated.

### <<Option 3-4B>>

Alternatively, a cell indicated by L1/L2 signaling (for example, DCI/MAC CE) to be used for cell switching may be limited to a cell associated with a TCI state activated.

Although Option 3-4 shows a relationship between set #C and set #B, this is not restrictive. This option may be similarly applied to a relationship between other sets (for example, between set #C and set #M). In this case, set #B may be replaced with set #M for application.

### <Fourth Embodiment>

A fourth embodiment describes an example of a relationship between a serving cell (or a set including the serving cell) configured with L1 beam measurement/reporting and a candidate cell (or a set including the candidate cell) configured with L1 beam measurement/reporting. The fourth embodiment may be combined with the first embodiment/second embodiment/third embodiment for application.

With a higher layer parameter, L1 beam measurement/reporting (or CSI measurement/reporting) for cells in set #D is configured. Set #D may be interpreted as a BWP/CC configured with L1 beam measurement/reporting by a higher layer parameter.

With a higher layer parameter, L1 beam measurement/reporting may be configured for a candidate cell/serving cell. A set including the candidate cell/serving cell is included in set #B (or candidate cell set #B). Based on the L1 beam reporting, L1/L2 cell switching indication signaling indicating cell switching may be indicated to a UE.

### {Option 4-1}

A cell in set #D may be associated with a serving cell (or a PCI of the serving cell) only. As a variation, a cell in set #D may be associated with an additional cell (or a PCI of the additional cell).

Alternatively, a cell in set #D may be associated with a specific serving cell (or a PCI of the specific serving cell) only. The specific serving cell may be an SpCell/PUCCH-SCell. As a variation, a cell in set #D may be associated with an SCell (or a PCI of the SCell).

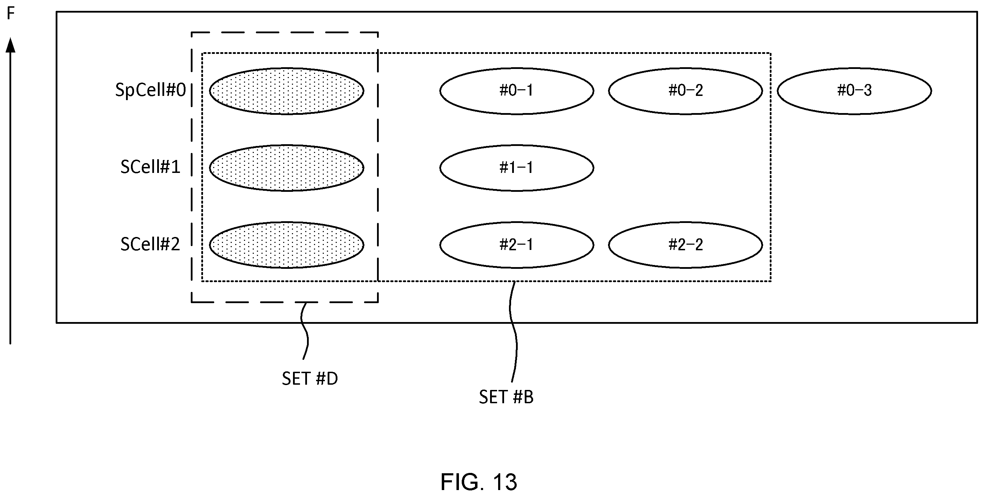

FIG. 13 shows an example of set #D. Here, a case is shown where cells included in set #D are serving cells (here, SpCell #0, SCell #1, and SCell #2).

When L1 beam measurement/reporting is configured for candidate cells/serving cells, a cell included in the candidate cells (for example, set #B) configured with L1 beam measurement/reporting may be different from a cell included in set #D (for example, set #D including only serving cells) in some cases (see FIG. 13). In such a case, it is required to appropriately control the relationship between set #B and set #D. Further, it is required to appropriately control a relationship between set #D and another set #A/#C/#M.

A UE may receive first information related to one or more serving cells configured with L1 beam measurement and reporting (for example, information related to cells included in set #D), second information related to one or more candidate cells configured with L1 beam measurement and reporting (for example, information related to cells included in another set #A/#B/#C/#M), and third information indicating deactivation of at least one of the serving cells and candidate cells (for example, MAC CE/DCI). The UE may control, based on the first information, the second information, and the third information, L1 beam measurement and reporting for the serving cells and candidate cells.

A relationship between set #D and set #A/#B/#C/#M shown in the second embodiment may be defined/configured based on at least one of Option 4-2 to Option 4-3.

### {Option 4-2}

When at least one of cells (for example, serving cells) included in set #D is deactivated, at least one of Option 4-2A and Option 4-2B below may be applied.

### <<Option 4-2A>>

When a cell included in set #D is deactivated, control may be performed such that L1 beam measurement/reporting (or CSI measurement/reporting) associated with the deactivated cell is not performed. Note that control may be performed such that L1 beam measurement (or CSI measurement) is performed but L1 beam reporting (or CSI reporting) is not performed.

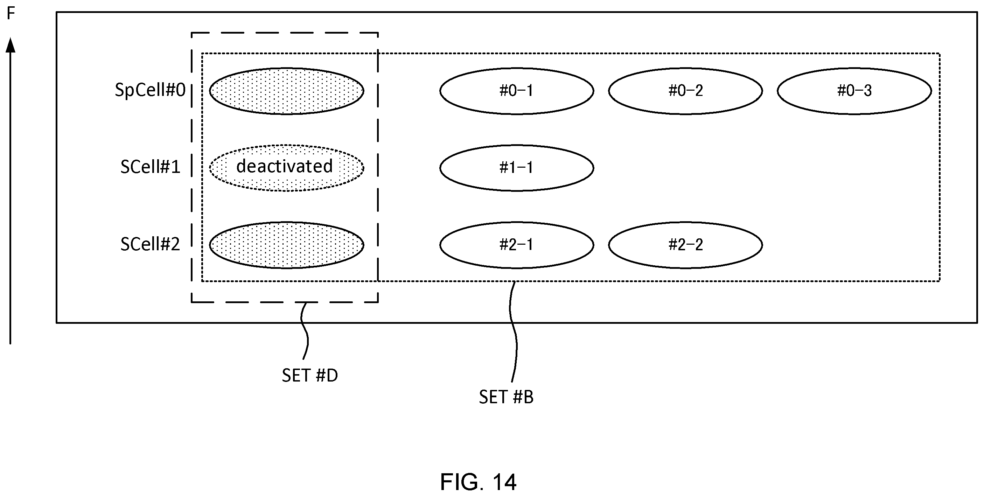

FIG. 14 shows a case where set #D includes SpCell #0, SCell #1, and SCell #2, and set #B includes SpCell #0, candidate cells #0-1, #0-2, and #0-3, SCell #1, candidate cell #1-1, SCell #2, and candidate cells #2-1 and #2-2. Note that set #B may include candidate cells only (or include no serving cell).

FIG. 14 shows a case where SCell #1 included in set #D is deactivated.

When SCell #1 is deactivated, control may be performed such that L1 beam measurement/reporting (or CSI measurement/reporting) associated with such SCell #1 is not performed. L1 beam measurement/reporting (or CSI measurement/reporting) associated with SCell #1 may be at least one of L1 beam measurement/reporting (or CSI measurement/reporting) for such SCell #1, L1 beam measurement/reporting (or CSI measurement/reporting) for a candidate cell associated with such SCell #1, and L1 beam measurement/reporting (or CSI measurement/reporting) for a candidate cell corresponding to a frequency of such SCell #1.

In a case where L1 beam measurement/reporting for candidate cell #1-1 is configured in SCell #1 (for example, configured in a higher layer parameter related to SCell #1) and SCell #1 is deactivated, an L1 beam measurement result of at least one of SCell #1 and candidate cell #1-1 need not be reported. For example, when SCell #1 is deactivated, a UE need not be requested for L1 beam measurement/reporting of SCell #1 and candidate cell #1-1.

Even in a case where SCell #1 is deactivated, when cell configuration and L1 beam measurement/reporting for candidate cell #1-1 are independent of (or are not associated with) cell configuration for SCell #1, L1 beam measurement/reporting for candidate cell #1-1 may be performed. For example, the UE may control to perform reporting of an L1 beam measurement result of candidate cell #1-1, without reporting an L1 beam measurement result of SCell #1 deactivated.

### <<Option 4-2B>>

L1 beam reporting associated with a deactivated cell may be performed in another cell (for example, serving cell). For example, when SCell #1 is deactivated, the UE may control to report, in another cell (for example, SpCell #0/SCell #2), an L1 beam measurement result of at least one of SCell #1 and candidate cell #1-1.

### {Option 4-3}

When at least one of candidate cells is deactivated, at least one of Option 4-3A and Option 4-3B below may be applied. Each candidate cell may be at least one of a candidate cell included in set #B, a target cell for L1 beam measurement/reporting, and a candidate cell to be a destination for switching.

### <<Option 4-3A>>

When one of the candidate cells is deactivated, control may be performed such that L1 beam measurement/reporting (or CSI measurement/reporting) associated with the deactivated cell is not performed. Note that control may be performed such that L1 beam measurement (or CSI measurement) is performed but L1 beam reporting (or CSI reporting) is not performed.

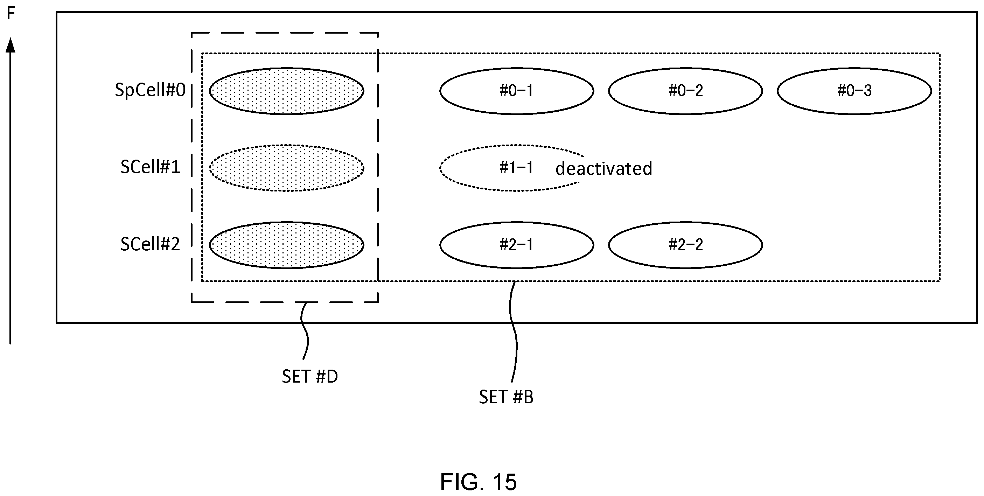

FIG. 15 shows a case where set #D includes SpCell #0, SCell #1, and SCell #2, and set #B includes SpCell #0, candidate cells #0-1, #0-2, and #0-3, SCell #1, candidate cell #1-1, SCell #2, and candidate cells #2-1 and #2-2. Note that set #B may include candidate cells only (or include no serving cell).

FIG. 15 shows a case where candidate cell 1-1 included in set #B is deactivated.

When candidate cell #1-1 is deactivated, control may be performed such that L1 beam measurement/reporting (or CSI measurement/reporting) for such candidate cell #1-1 is not performed. In this case, a UE may control to perform L1 beam measurement/reporting (or CSI measurement/reporting) for a serving cell (here, SCell #1) associated with candidate cell #1-1.

### <<Option 4-3B>>

When one of the candidate cells is deactivated, L1 beam measurement/reporting (or CSI measurement/reporting) for the deactivated cell may be still performed. For example, when candidate cell #1-1 is deactivated, the UE may control to perform L1 beam measurement (or CSI measurement) for such candidate cell #1-1 and report a measurement result.

In the present embodiment, "not to be reported" may mean "not to be reported with reduction in UCI payload" or "not to be reported with UCI payload maintained (for example, dummy UCI bits are replaced)."

In the present embodiment, a relationship between set #D and set #B may be applied to a relationship between set #D and set #A/#C/#M. In this case, set #B may be replaced with set #A/#C/#M.

### {Variations}

Option 4-2/Option 4-3 may be applied to a case where set #D (for example, SCell #1) is not configured (or a case where a serving cell corresponding to a frequency of a candidate cell is not configured).

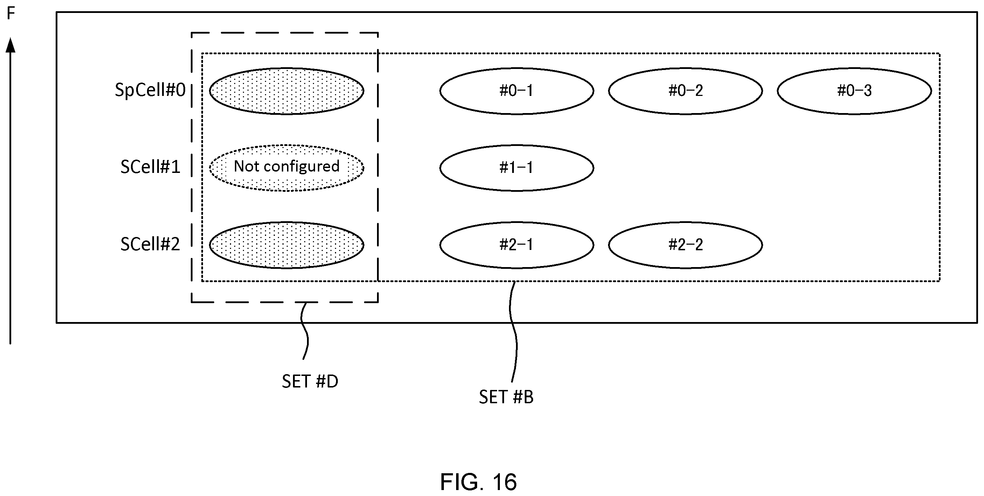

FIG. 16 shows a case where set #D includes SpCell #0 and SCell #1 and set #B includes SpCell #0, candidate cells #0-1 and #0-2, SCell #1, candidate cell #1-1, SCell #2, candidate cells #2-1 and #2-2. Note that set #B may include candidate cells only (or include no serving cell). In such a case, Option 4-2/Option 4-3 may be applied.

In this case, a configuration may be used where L1 beam measurement/reporting for candidate cell #1-1 is not supported or not allowed (Option 4-3A').

Alternatively, a configuration may be used where L1 beam measurement/reporting for candidate cell #1-1 is supported or allowed (Option 4-3B'). In this case, RRC configuration related to L1 beam reporting for candidate cell #1-1 may be configured in another cell. Such another cell may be, for example, a serving cell corresponding to another frequency/a non-serving cell corresponding to another frequency/a non-serving cell corresponding to the same frequency. An L1 beam measurement result (or CSI measurement result) for candidate cell #1-1 may be reported in another cell. Such another cell may be, for example, a serving cell corresponding to another frequency/a non-serving cell corresponding to another frequency/a non-serving cell corresponding to the same frequency.

### <Supplements>

At least one of the above-described embodiments may be applied only to a UE that has reported specific UE capability or that supports the specific UE capability.

The specific UE capability may indicate at least one of the following:
- UE capability related to the number of cells (or the number of beams, the number of pieces of CSI) to be configured/reported in a case where L1 beam (or CSI) measurement/reporting is supported
- UE capability related to the number of cells (or the number of beams, the number of pieces of CSI) to be configured/reported per CSI resource configuration/per CSI report configuration/per frequency
- UE capability related to the number of cells (or the number of beams, the number of pieces of CSI) to be configured/reported over CSI resource configurations/CSI report configurations/frequencies
- Support of a MAC CE (for example, new MAC CE) indicating activation/deactivation of a candidate cell
- Support of L1 beam measurement/reporting of a deactivated serving cell/candidate cell

The specific UE capability may be capability applied over all the frequencies (commonly irrespective of frequency), capability per frequency (for example, one or a combination of cell, band, band combination, BWP, component carrier, and the like), capability per frequency range (for example, Frequency Range 1 (FR1), FR2, FR3, FR4, FR5, FR2-1, FR2-2), capability per subcarrier spacing (SCS), or capability per Feature Set (FS) or Feature Set Per Component-carrier (FSPC).

The specific UE capability may be capability applied over all the duplex schemes (commonly irrespective of duplex scheme) or capability per duplex scheme (for example, time division duplex (TDD) or per frequency division duplex (FDD)).

At least one of the above-described embodiments may be applied when the UE is configured with specific information related to the above-described embodiment by higher layer signaling.

The UE may apply, for example, Rel-15/16/17 operation when the UE does not support at least one of the specific UE capabilities or is not configured with the specific information.

### (Supplementary Notes)

Regarding one embodiment of the present disclosure, the following supplementary notes of the invention will be given.

### {Supplementary Note 1-1}

A terminal including: a receiving section that receives information related to at least one of a channel state information resource configuration and a channel state information report configuration for one or more candidate cells corresponding to different frequencies; and a control section that controls, based on the information related to at least one of the channel state information resource configuration and the channel state information report configuration, to report channel state information including at least one of L1-RSRP (Reference Signal Received Power) and L1-SINR (Signal to Interference plus Noise Ratio) for the one or more candidate cells.

### {Supplementary Note 1-2}

The terminal according to supplementary note 1-1, wherein the control section controls, when reporting of both the L1-RSRP and the L1-SINR is configured, to report both the L1-RSRP and the L1-SINR for a specific candidate cell or specific reference signal resource index and to report either one of the L1-RSRP or the L1-SINR for another candidate cell or reference signal resource index.

### {Supplementary Note 1-3}

The terminal according to supplementary note 1-1 or 1-2, wherein the control section controls, when reporting of either one of the L1-RSRP or the L1-SINR is configured, to report both the L1-RSRP and the L1-SINR for a specific candidate cell or specific reference signal resource index and to report either one of the L1-RSRP or the L1-SINR for another candidate cell or reference signal resource index.

### {Supplementary Note 1-4}

The terminal according to any one of supplementary notes 1-1 to 1-3, wherein at least one of the channel state information resource configuration and the channel state information report configuration includes at least one of information related to a frequency for measurement to be performed and information related a frequency for a measurement result to be reported.

### {Supplementary Note 2-1}

A terminal including: a receiving section that receives first information related to one or more configured candidate cells and second information related to one or more candidate cells configured with L1 beam measurement and reporting; and a control section that controls, based on the second information, L1 beam measurement and reporting for the one or more candidate cells configured with L1 beam measurement and reporting, wherein the one or more candidate cells configured with L1 beam measurement and reporting are included in the one or more configured candidate cells.

### {Supplementary Note 2-2}

The terminal according to supplementary note 2-1, wherein the receiving section receives indication information indicating activation or deactivation of the one or more configured candidate cells, and the control section controls, when a certain candidate cell is deactivated by the indication information, not to perform at least one of L1 beam measurement and reporting corresponding to the certain candidate cell.

### {Supplementary Note 2-3}

The terminal according to supplementary note 2-1 or 2-2, wherein a candidate cell with cell switching indicated is included in the one or more candidate cells configured with L1 beam and reporting.

### {Supplementary Note 2-4}

The terminal according to any one of supplementary notes 2-1 to 2-3, wherein the receiving section receives indication information indicating activation of a transmission configuration indication (TCI) state, and a candidate cell associated with the TCI state with activation indicated is included in the one or more candidate cells configured with L1 beam measurement and reporting.

### {Supplementary Note 3-1}

A terminal including: a receiving section that receives first information related to one or more serving cells configured with L1 beam measurement and reporting, second information related to one or more candidate cells configured with L1 beam measurement and reporting, and third information indicating deactivation of at least one of the serving cells and candidate cells; and a control section that controls, based on the first information, the second information, and the third information, L1 beam measurement and reporting for the serving cells and candidate cells.

### {Supplementary Note 3-2}

The terminal according to supplementary note 3-1, wherein the control section controls, when a certain serving cell is deactivated, not to perform at least one of L1 beam measurement and reporting for the certain serving cell and L1 beam measurement and reporting for a candidate cell associated with the certain serving cell.

### {Supplementary Note 3-3}

The terminal according to supplementary note 3-1 or **3-2,** wherein the control section continues, when a certain candidate cell is deactivated, L1 beam measurement and reporting for a serving cell corresponding to the certain candidate cell, without performing L1 beam measurement nor reporting for the certain candidate cell.

### {Supplementary Note 3-4}

The terminal according to any one of supplementary notes 3-1 to 3-3, wherein the control section continues, when a certain candidate cell is deactivated, L1 beam measurement and reporting for the certain candidate cell.

### (Radio Communication System)

Hereinafter, a structure of a radio communication system according to one embodiment of the present disclosure will be described. In this radio communication system, the radio communication method according to each embodiment of the present disclosure described above may be used alone or may be used in combination for communication.

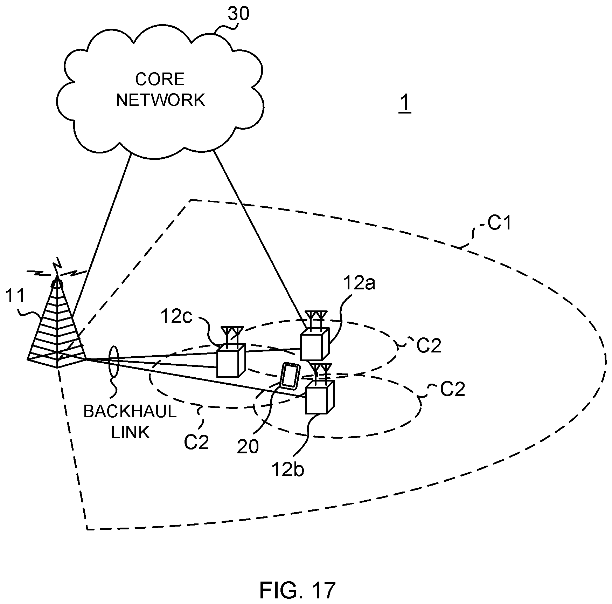

FIG. 17 is a diagram to show an example of a schematic structure of the radio communication system according to one embodiment. The radio communication system 1 (which may be referred to simply as a system 1) may be a system implementing a communication using Long Term Evolution (LTE), 5th generation mobile communication system New Radio (5G NR) and so on the specifications of which have been drafted by Third Generation Partnership Project (3GPP).

The radio communication system 1 may support dual connectivity (multi-RAT dual connectivity (MR-DC)) between a plurality of Radio Access Technologies (RATs). The MR-DC may include dual connectivity (E-UTRA-NR Dual Connectivity (EN-DC)) between LTE (Evolved Universal Terrestrial Radio Access (E-UTRA)) and NR, dual connectivity (NR-E-UTRA Dual Connectivity (NE-DC)) between NR and LTE, and so on.

In EN-DC, a base station (eNB) of LTE (E-UTRA) is a master node (MN), and a base station (gNB) of NR is a secondary node (SN). In NE-DC, a base station (gNB) of NR is an MN, and a base station (eNB) of LTE (E-UTRA) is an SN.

The radio communication system 1 may support dual connectivity between a plurality of base stations in the same RAT (for example, dual connectivity (NR-NR Dual Connectivity (NN-DC)) where both of an MN and an SN are base stations (gNB) of NR).

The radio communication system 1 may include a base station 11 that forms a macro cell C1 of a relatively wide coverage, and base stations 12 (12a to 12c) that form small cells C2, which are placed within the macro cell C1 and which are narrower than the macro cell C1. The user terminal 20 may be located in at least one cell. The arrangement, the number, and the like of each cell and user terminal 20 are by no means limited to the aspect shown in the diagram. Hereinafter, the base stations 11 and 12 will be collectively referred to as "base stations 10," unless specified otherwise.

The user terminal 20 may be connected to at least one of the plurality of base stations 10. The user terminal 20 may use at least one of carrier aggregation (CA) and dual connectivity (DC) using a plurality of component carriers (CCs).

Each CC may be included in at least one of a first frequency band (Frequency Range 1 (FR1)) and a second frequency band (Frequency Range 2 (FR2)). The macro cell C1 may be included in FR1, and the small cells C2 may be included in FR2. For example, FR1 may be a frequency band of 6 GHz or less (sub-6 GHz), and FR2 may be a frequency band which is higher than 24 GHz (above-24 GHz). Note that frequency bands, definitions and so on of FR1 and FR2 are by no means limited to these, and for example, FR1 may correspond to a frequency band which is higher than FR2.

The user terminal 20 may communicate using at least one of time division duplex (TDD) and frequency division duplex (FDD) in each CC.

The plurality of base stations 10 may be connected by a wired connection (for example, optical fiber in compliance with the Common Public Radio Interface (CPRI), the X2 interface and so on) or a wireless connection (for example, an NR communication). For example, if an NR communication is used as a backhaul between the base stations 11 and 12, the base station 11 corresponding to a higher station may be referred to as an "Integrated Access Backhaul (IAB) donor," and the base station 12 corresponding to a relay station (relay) may be referred to as an "IAB node."

The base station 10 may be connected to a core network 30 through another base station 10 or directly. For example, the core network 30 may include at least one of Evolved Packet Core (EPC), 5G Core Network (5GCN), Next Generation Core (NGC), and so on.

The core network 30 may include network functions (NFs) such as User Plane Function (UPF), Access and Mobility management Function (AMF), Session Management Function (SMF), Unified Data Management (UDM), Application Function (AF), Data Network (DN), Location Management Function (LMF), and operation, administration and maintenance (Management) (OAM), for example. Note that a plurality of functions may be provided by one network node. Communication with an external network (for example, the Internet) may be performed via the DN.

The user terminal 20 may be a terminal supporting at least one of communication schemes such as LTE, LTE-A, 5G, and so on.

In the radio communication system 1, an orthogonal frequency division multiplexing (OFDM)-based wireless access scheme may be used. For example, in at least one of the downlink (DL) and the uplink (UL), Cyclic Prefix OFDM (CP-OFDM), Discrete Fourier Transform Spread OFDM (DFT-s-OFDM), Orthogonal Frequency Division Multiple Access (OFDMA), Single Carrier Frequency Division Multiple Access (SC-FDMA), and so on may be used.

The wireless access scheme may be referred to as a "waveform." Note that, in the radio communication system 1, another wireless access scheme (for example, another single carrier transmission scheme, another multi-carrier transmission scheme) may be used for a wireless access scheme in the UL and the DL.

In the radio communication system 1, a downlink shared channel (Physical Downlink Shared Channel (PDSCH)), which is used by each user terminal 20 on a shared basis, a broadcast channel (Physical Broadcast Channel (PBCH)), a downlink control channel (Physical Downlink Control Channel (PDCCH)) and so on, may be used as downlink channels.

In the radio communication system 1, an uplink shared channel (Physical Uplink Shared Channel (PUSCH)), which is used by each user terminal 20 on a shared basis, an uplink control channel (Physical Uplink Control Channel (PUCCH)), a random access channel (Physical Random Access Channel (PRACH)) and so on may be used as uplink channels.

User data, higher layer control information, System Information Blocks (SIBs) and so on are communicated on the PDSCH. User data, higher layer control information and so on may be communicated on the PUSCH. The Master Information Blocks (MIBs) may be communicated on the PBCH.

Lower layer control information may be communicated on the PDCCH. For example, the lower layer control information may include downlink control information (DCI) including scheduling information of at least one of the PDSCH and the PUSCH.

Note that DCI for scheduling the PDSCH may be referred to as "DL assignment," "DL DCI," and so on, and DCI for scheduling the PUSCH may be referred to as "UL grant," "UL DCI," and so on. Note that the PDSCH may be interpreted as "DL data", and the PUSCH may be interpreted as "UL data".

For detection of the PDCCH, a control resource set (CORESET) and a search space may be used. The CORESET corresponds to a resource to search DCI. The search space corresponds to a search area and a search method of PDCCH candidates. One CORESET may be associated with one or more search spaces. The UE may monitor a CORESET associated with a certain search space, based on search space configuration.

One search space may correspond to a PDCCH candidate corresponding to one or more aggregation levels. One or more search spaces may be referred to as a "search space set." Note that a "search space," a "search space set," a "search space configuration," a "search space set configuration," a "CORESET," a "CORESET configuration" and so on of the present disclosure may be interchangeably interpreted.

Uplink control information (UCI) including at least one of channel state information (CSI), transmission confirmation information (for example, which may be referred to as Hybrid Automatic Repeat reQuest ACKnowledgement (HARQ-ACK), ACK/NACK, and so on), and scheduling request (SR) may be communicated by means of the PUCCH. By means of the PRACH, random access preambles for establishing connections with cells may be communicated.

Note that the downlink, the uplink, and so on in the present disclosure may be expressed without a term of "link." In addition, various channels may be expressed without adding "Physical" to the head.

In the radio communication system 1, a synchronization signal (SS), a downlink reference signal (DL-RS), and so on may be communicated. In the radio communication system 1, a cellspecific reference signal (CRS), a channel state informationreference signal (CSI-RS), a demodulation reference signal (DMRS), a positioning reference signal (PRS), a phase tracking reference signal (PTRS), and so on may be communicated as the DL-RS.

For example, the synchronization signal may be at least one of a primary synchronization signal (PSS) and a secondary synchronization signal (SSS). A signal block including an SS (PSS, SSS) and a PBCH (and a DMRS for a PBCH) may be referred to as an "SS/PBCH block," an "SS Block (SSB)," and so on. Note that an SS, an SSB, and so on may be referred to as a "reference signal."

In the radio communication system 1, a reference signal for measurement (Sounding Reference Signal (SRS)), a demodulation reference signal (DMRS), or the like may be communicated as an uplink reference signal (UL-RS). Note that DMRS may be referred to as a "user terminal specific reference signal (UE-specific Reference Signal)."

### (Base Station)

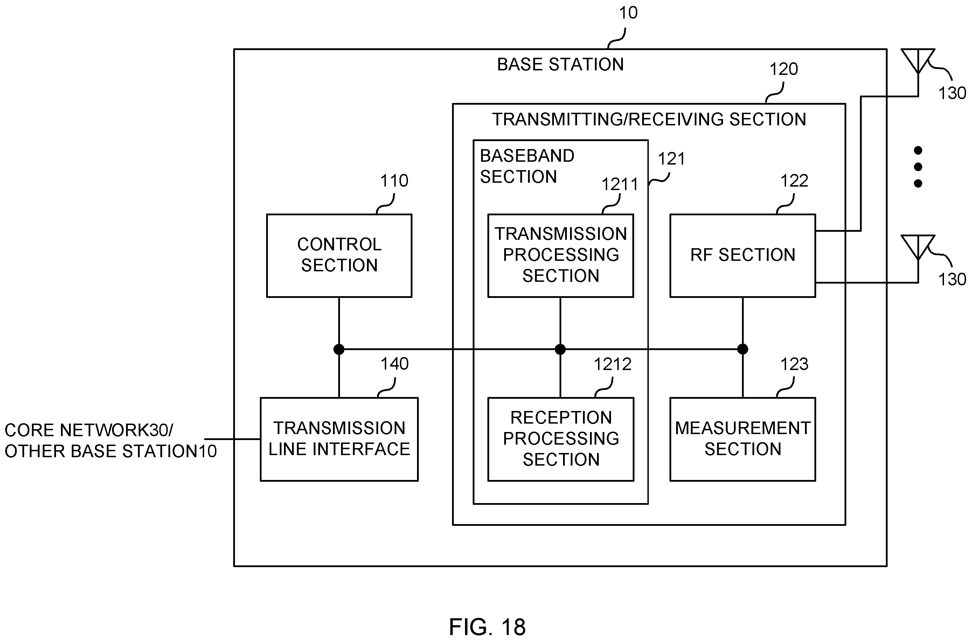

FIG. 18 is a diagram to show an example of a structure of the base station according to one embodiment. The base station 10 includes a control section 110, a transmitting/receiving section 120, transmitting/receiving antennas 130 and a transmission line interface 140. Note that the base station 10 may include one or more control sections 110, one or more transmitting/receiving sections 120, one or more transmitting/receiving antennas 130, and one or more transmission line interfaces 140.

Note that, the present example primarily shows functional blocks that pertain to characteristic parts of the present embodiment, and it is assumed that the base station 10 may include other functional blocks that are necessary for radio communication as well. Part of the processes of each section described below may be omitted.

The control section 110 controls the whole of the base station 10. The control section 110 can be constituted with a controller, a control circuit, or the like described based on general understanding of the technical field to which the present disclosure pertains.

The control section 110 may control generation of signals, scheduling (for example, resource allocation, mapping), and so on. The control section 110 may control transmission and reception, measurement and so on using the transmitting/receiving section 120, the transmitting/receiving antennas 130, and the transmission line interface 140. The control section 110 may generate data, control information, a sequence and so on to transmit as a signal, and forward the generated items to the transmitting/receiving section 120. The control section 110 may perform call processing (setting up, releasing) for communication channels, manage the state of the base station 10, and manage the radio resources.

The transmitting/receiving section 120 may include a baseband section 121, a Radio Frequency (RF) section 122, and a measurement section 123. The baseband section 121 may include a transmission processing section 1211 and a reception processing section 1212. The transmitting/receiving section 120 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 120 may be structured as a transmitting/receiving section in one entity, or may be constituted with a transmitting section and a receiving section. The transmitting section may be constituted with the transmission processing section 1211, and the RF section 122. The receiving section may be constituted with the reception processing section 1212, the RF section 122, and the measurement section 123.

The transmitting/receiving antennas 130 can be constituted with antennas, for example, an array antenna, or the like described based on general understanding of the technical field to which the present disclosure pertains.

The transmitting/receiving section 120 may transmit the above-described downlink channel, synchronization signal, downlink reference signal, and so on. The transmitting/receiving section 120 may receive the above-described uplink channel, uplink reference signal, and so on.

The transmitting/receiving section 120 may form at least one of a transmit beam and a receive beam by using digital beam forming (for example, precoding), analog beam forming (for example, phase rotation), and so on.

The transmitting/receiving section 120 (transmission processing section 1211) may perform the processing of the Packet Data Convergence Protocol (PDCP) layer, the processing of the Radio Link Control (RLC) layer (for example, RLC retransmission control), the processing of the Medium Access Control (MAC) layer (for example, HARQ retransmission control), and so on, for example, on data and control information and so on acquired from the control section 110, and may generate bit string to transmit.

The transmitting/receiving section 120 (transmission processing section 1211) may perform transmission processing such as channel coding (which may include error correction coding), modulation, mapping, filtering, discrete Fourier transform (DFT) processing (as necessary), inverse fast Fourier transform (IFFT) processing, precoding, digital-to-analog conversion, and so on, on the bit string to transmit, and output a baseband signal.

The transmitting/receiving section 120 (RF section 122) may perform modulation to a radio frequency band, filtering, amplification, and so on, on the baseband signal, and transmit the signal of the radio frequency band through the transmitting/receiving antennas 130.

On the other hand, the transmitting/receiving section 120 (RF section 122) may perform amplification, filtering, demodulation to a baseband signal, and so on, on the signal of the radio frequency band received by the transmitting/receiving antennas 130.

The transmitting/receiving section 120 (reception processing section 1212) may apply reception processing such as analogdigital conversion, fast Fourier transform (FFT) processing, inverse discrete Fourier transform (IDFT) processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 120 (measurement section 123) may perform the measurement related to the received signal. For example, the measurement section 123 may perform Radio Resource Management (RRM) measurement, Channel State Information (CSI) measurement, and so on, based on the received signal. The measurement section 123 may measure a received power (for example, Reference Signal Received Power (RSRP)), a received quality (for example, Reference Signal Received Quality (RSRQ), a Signal to Interference plus Noise Ratio (SINR), a Signal to Noise Ratio (SNR)), a signal strength (for example, Received Signal Strength Indicator (RSSI)), channel information (for example, CSI), and so on. The measurement results may be output to the control section 110.

The transmission line interface 140 may perform transmission/reception (backhaul signaling) of a signal with an apparatus (for example, a network node that provides an NF) included in the core network 30 or other base stations 10, and so on, and acquire or transmit user data (user plane data), control plane data, and so on for the user terminal 20.

Note that the transmitting section and the receiving section of the base station 10 in the present disclosure may be constituted with at least one of the transmitting/receiving section 120, the transmitting/receiving antennas 130, and the transmission line interface 140.

The transmitting/receiving section 120 may transmit information related to at least one of a channel state information resource configuration and a channel state information report configuration for one or more candidate cells corresponding to different frequencies. The control section 110 may indicate, based on the information related to at least one of the channel state information resource configuration and the channel state information report configuration, reporting of channel state information including at least one of L1-RSRP (Reference Signal Received Power) and L1-SINR (Signal to Interference plus Noise Ratio) for the one or more candidate cells.

The transmitting/receiving section 120 may transmit first information related to one or more configured candidate cells and second information related to one or more candidate cells configured with L1 beam measurement and reporting. The control section 110 may perform, based on the second information, control to indicate L1 beam measurement and reporting for the one or more candidate cells configured with L1 beam measurement and reporting. The one or more candidate cells configured with L1 beam measurement and reporting may be included in the one or more configured candidate cells.

The transmitting/receiving section 120 may transmit first information related to one or more serving cells configured with L1 beam measurement and reporting, second information related to one or more candidate cells configured with L1 beam measurement and reporting, and third information indicating deactivation of at least one of the serving cells and candidate cells. The control section 110 may control, by using the first information, the second information, and the third information, L1 beam measurement and reporting for the serving cells and candidate cells.

### (User Terminal)

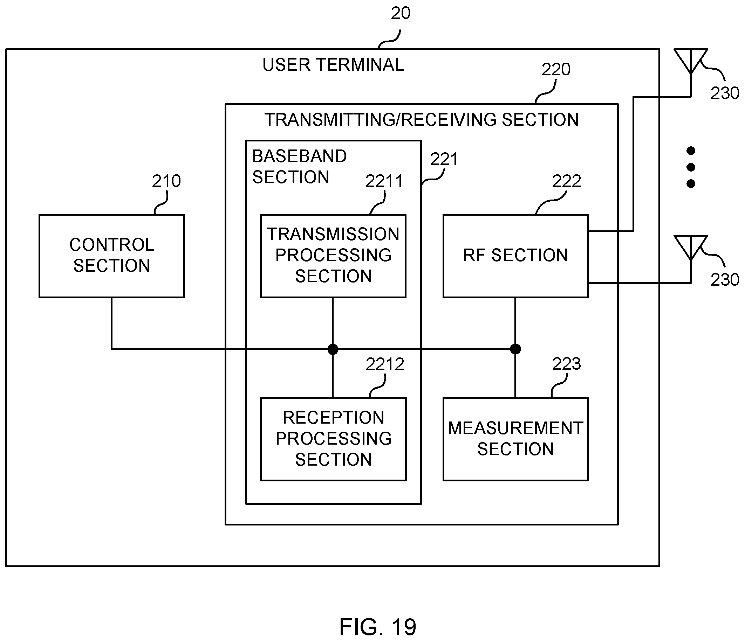

FIG. 19 is a diagram to show an example of a structure of the user terminal according to one embodiment. The user terminal 20 includes a control section 210, a transmitting/receiving section 220, and transmitting/receiving antennas 230. Note that the user terminal 20 may include one or more control sections 210, one or more transmitting/receiving sections 220, and one or more transmitting/receiving antennas 230.

Note that, the present example primarily shows functional blocks that pertain to characteristic parts of the present embodiment, and it is assumed that the user terminal 20 may include other functional blocks that are necessary for radio communication as well. Part of the processes of each section described below may be omitted.

The control section 210 controls the whole of the user terminal 20. The control section 210 can be constituted with a controller, a control circuit, or the like described based on general understanding of the technical field to which the present disclosure pertains.

The control section 210 may control generation of signals, mapping, and so on. The control section 210 may control transmission/reception, measurement and so on using the transmitting/receiving section 220, and the transmitting/receiving antennas 230. The control section 210 generates data, control information, a sequence and so on to transmit as a signal, and may forward the generated items to the transmitting/receiving section 220.

The transmitting/receiving section 220 may include a baseband section 221, an RF section 222, and a measurement section 223. The baseband section 221 may include a transmission processing section 2211 and a reception processing section 2212. The transmitting/receiving section 220 can be constituted with a transmitter/receiver, an RF circuit, a baseband circuit, a filter, a phase shifter, a measurement circuit, a transmitting/receiving circuit, or the like described based on general understanding of the technical field to which the present disclosure pertains.

The transmitting/receiving section 220 may be structured as a transmitting/receiving section in one entity, or may be constituted with a transmitting section and a receiving section. The transmitting section may be constituted with the transmission processing section 2211, and the RF section 222. The receiving section may be constituted with the reception processing section 2212, the RF section 222, and the measurement section 223.

The transmitting/receiving antennas 230 can be constituted with antennas, for example, an array antenna, or the like described based on general understanding of the technical field to which the present disclosure pertains.

The transmitting/receiving section 220 may receive the above-described downlink channel, synchronization signal, downlink reference signal, and so on. The transmitting/receiving section 220 may transmit the above-described uplink channel, uplink reference signal, and so on.

The transmitting/receiving section 220 may form at least one of a transmit beam and a receive beam by using digital beam forming (for example, precoding), analog beam forming (for example, phase rotation), and so on.

The transmitting/receiving section 220 (transmission processing section 2211) may perform the processing of the PDCP layer, the processing of the RLC layer (for example, RLC retransmission control), the processing of the MAC layer (for example, HARQ retransmission control), and so on, for example, on data and control information and so on acquired from the control section 210, and may generate bit string to transmit.

The transmitting/receiving section 220 (transmission processing section 2211) may perform transmission processing such as channel coding (which may include error correction coding), modulation, mapping, filtering, DFT processing (as necessary), IFFT processing, precoding, digital-to-analog conversion, and so on, on the bit string to transmit, and output a baseband signal.

Note that, whether to apply DFT processing or not may be based on the configuration of the transform precoding. The transmitting/receiving section 220 (transmission processing section 2211) may perform, for a certain channel (for example, PUSCH), the DFT processing as the above-described transmission processing to transmit the channel by using a DFT-s-OFDM waveform if transform precoding is enabled, and otherwise, does not need to perform the DFT processing as the above-described transmission processing.

The transmitting/receiving section 220 (RF section 222) may perform modulation to a radio frequency band, filtering, amplification, and so on, on the baseband signal, and transmit the signal of the radio frequency band through the transmitting/receiving antennas 230.

On the other hand, the transmitting/receiving section 220 (RF section 222) may perform amplification, filtering, demodulation to a baseband signal, and so on, on the signal of the radio frequency band received by the transmitting/receiving antennas 230.

The transmitting/receiving section 220 (reception processing section 2212) may apply reception processing such as analogdigital conversion, FFT processing, IDFT processing (as necessary), filtering, de-mapping, demodulation, decoding (which may include error correction decoding), MAC layer processing, the processing of the RLC layer and the processing of the PDCP layer, and so on, on the acquired baseband signal, and acquire user data, and so on.

The transmitting/receiving section 220 (measurement section 223) may perform the measurement related to the received signal. For example, the measurement section 223 may perform RRM measurement, CSI measurement, and so on, based on the received signal. The measurement section 223 may measure a received power (for example, RSRP), a received quality (for example, RSRQ, SINR, SNR), a signal strength (for example, RSSI), channel information (for example, CSI), and so on. The measurement results may be output to the control section 210.

Note that the transmitting section and the receiving section of the user terminal 20 in the present disclosure may be constituted with at least one of the transmitting/receiving section 220 and the transmitting/receiving antennas 230.

The transmitting/receiving section 220 may receive information related to at least one of a channel state information resource configuration and a channel state information report configuration for one or more candidate cells corresponding to different frequencies. The control section 210 may control, based on the information related to at least one of the channel state information resource configuration and the channel state information report configuration, to report channel state information including at least one of L1-RSRP (Reference Signal Received Power) and L1-SINR (Signal to Interference plus Noise Ratio) for the one or more candidate cells.

When reporting of both the L1-RSRP and the L1-SINR is configured, the control section 210 may control to report both the L1-RSRP and the L1-SINR for a specific candidate cell or specific reference signal resource index and to report either one of the L1-RSRP or the L1-SINR for another candidate cell or reference signal resource index.

When reporting of either one of the L1-RSRP or the L1-SINR is configured, the control section 210 may control to report both the L1-RSRP and the L1-SINR for a specific candidate cell or specific reference signal resource index and to report either one of the L1-RSRP or the L1-SINR for another candidate cell or reference signal resource index.

At least one of the channel state information resource configuration and the channel state information report configuration may include at least one of information related to a frequency for measurement to be performed and information related a frequency for a measurement result to be reported.

The transmitting/receiving section 220 may receive first information related to one or more configured candidate cells and second information related to one or more candidate cells configured with L1 beam measurement and reporting. The control section 210 may control, based on the second information, L1 beam measurement and reporting for the one or more candidate cells configured with L1 beam measurement and reporting. The one or more candidate cells configured with L1 beam measurement and reporting may be included in the one or more configured candidate cells.

The transmitting/receiving section 220 may receive indication information indicating activation or deactivation of the one or more configured candidate cells. When a certain candidate cell is deactivated by the indication information, the control section 210 may control not to perform at least one of L1 beam measurement and reporting corresponding to the certain candidate cell. A candidate cell with cell switching indicated may be included in the one or more candidate cells configured with L1 beam and reporting. The transmitting/receiving section 220 may receive indication information indicating activation of a transmission configuration indication (TCI) state. A candidate cell associated with the TCI state with activation indicated may be included in the candidate cells configured with L1 beam measurement and reporting.

The transmitting/receiving section 220 may receive first information related to one or more serving cells configured with L1 beam measurement and reporting, second information related to one or more candidate cells configured with L1 beam measurement and reporting, and third information indicating deactivation of at least one of the serving cells and candidate cells. The control section 210 may control, based on the first information, the second information, and the third information, L1 beam measurement and reporting for the serving cells and candidate cells.

When a certain serving cell is deactivated, the control section 210 may control not to perform at least one of L1 beam measurement and reporting of the certain serving cell and L1 beam measurement and reporting of a candidate cell associated with the certain serving cell. When a certain candidate cell is deactivated, the control section 210 may continue L1 beam measurement and reporting of a serving cell corresponding to the certain candidate cell, without performing L1 beam measurement nor reporting for the certain candidate cell. When a certain candidate cell is deactivated, the control section 210 may continue L1 beam measurement and reporting for the certain candidate cell.

### (Hardware Structure)

Note that the block diagrams that have been used to describe the above embodiments show blocks in functional units. These functional blocks (components) may be implemented in arbitrary combinations of at least one of hardware and software. Also, the method for implementing each functional block is not particularly limited. That is, each functional block may be realized by one piece of apparatus that is physically or logically coupled, or may be realized by directly or indirectly connecting two or more physically or logically separate apparatuses (for example, via wire, wireless, or the like) and using these apparatuses. The functional blocks may be implemented by combining software into the apparatus described above or the plurality of apparatuses described above.

Here, functions include judgment, determination, decision, calculation, computation, processing, derivation, investigation, search, confirmation, reception, transmission, output, access, resolution, selection, designation, establishment, comparison, assumption, expectation, considering, broadcasting, notifying, communicating, forwarding, configuring, reconfiguring, allocating (mapping), assigning, and the like, but functions are by no means limited to these. For example, a functional block (component) to implement a function of transmission may be referred to as a "transmitting section (transmitting unit)", a "transmitter", or the like. The method for implementing each component is not particularly limited as described above.

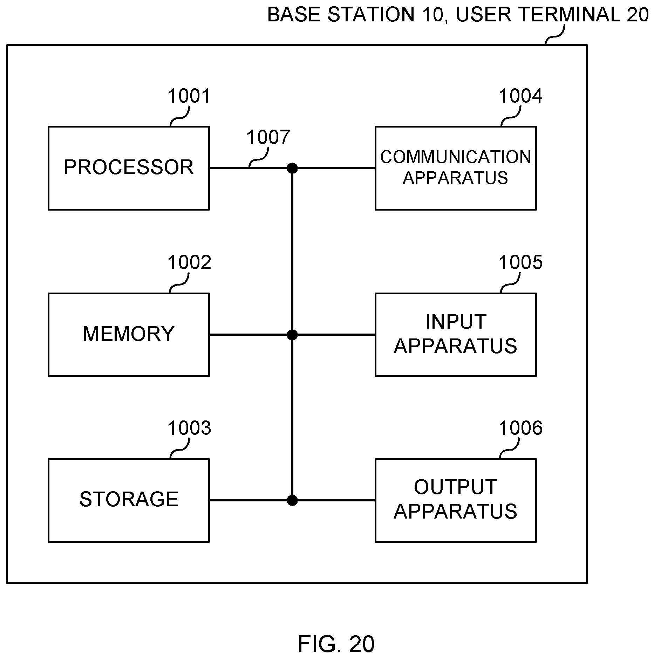

For example, a base station, a user terminal, and so on according to one embodiment of the present disclosure may function as a computer that executes the processes of the radio communication method of the present disclosure. FIG. 20 is a diagram to show an example of a hardware structure of the base station and the user terminal according to one embodiment. Physically, the above-described base station 10 and user terminal 20 may each be formed as a computer apparatus that includes a processor 1001, a memory 1002, a storage 1003, a communication apparatus 1004, an input apparatus 1005, an output apparatus 1006, a bus 1007, and so on.

Note that in the present disclosure, the words such as an apparatus, a circuit, a device, a section, a unit, and so on can be interchangeably used. The hardware structure of the base station 10 and the user terminal 20 may be configured to include one or more of apparatuses shown in the drawings, or may be configured not to include part of apparatuses.

For example, although one processor 1001 is shown in the drawings, a plurality of processors may be provided. Furthermore, processes may be implemented with one processor or may be implemented at the same time, in sequence, or in different manners with two or more processors. Note that the processor 1001 may be implemented with one or more chips.

Each function of the base station 10 and the user terminal 20 is implemented, for example, by allowing certain software (programs) to be read on hardware such as the processor 1001 and the memory 1002, and by allowing the processor 1001 to perform calculations to control communication via the communication apparatus 1004 and control at least one of reading and writing of data in the memory 1002 and the storage 1003.

The processor 1001 controls the whole computer by, for example, running an operating system. The processor 1001 may be configured with a central processing unit (CPU), which includes interfaces with peripheral apparatus, control apparatus, computing apparatus, a register, and so on. For example, at least a part of the control section 110 (210), the transmitting/receiving section 120 (220), and so on may be implemented by the processor 1001.

Furthermore, the processor 1001 reads programs (program codes), software modules, data, and so on from at least one of the storage 1003 and the communication apparatus 1004, into the memory 1002, and executes various processes according to these. As for the programs, programs to allow computers to execute at least a part of the operations explained in the above-described embodiments are used. For example, the control section 110 (210) may be implemented by control programs that are stored in the memory 1002 and that operate on the processor 1001, and other functional blocks may be implemented likewise.

The memory 1002 is a computer-readable recording medium, and may be constituted with, for example, at least one of a Read Only Memory (ROM), an Erasable Programmable ROM (EPROM), an Electrically EPROM (EEPROM), a Random Access Memory (RAM), and other appropriate storage media. The memory 1002 may be referred to as a "register", a "cache", a "main memory (primary storage apparatus)" and so on. The memory 1002 can store executable programs (program codes), software modules, and the like for implementing the radio communication method according to one embodiment of the present disclosure.

The storage 1003 is a computer-readable recording medium, and may be constituted with, for example, at least one of a flexible disk, a floppy (registered trademark) disk, a magneto-optical disk (for example, a compact disc (Compact Disc ROM (CD-ROM) and so on), a digital versatile disc, a Blu-ray (registered trademark) disk), a removable disk, a hard disk drive, a smart card, a flash memory device (for example, a card, a stick, and a key drive), a magnetic stripe, a database, a server, and other appropriate storage media. The storage 1003 may be referred to as "auxiliary storage apparatus".

The communication apparatus 1004 is hardware (transmitting/receiving device) for allowing inter-computer communication via at least one of wired and wireless networks, and may be referred to as, for example, a "network device", a "network controller", a "network card", a "communication module", and so on. The communication apparatus 1004 may be configured to include a high frequency switch, a duplexer, a filter, a frequency synthesizer, and so on in order to realize, for example, at least one of frequency division duplex (FDD) and time division duplex (TDD). For example, the transmitting/receiving section 120 (220), the transmitting/receiving antenna 130 (230), and so on may be implemented by the communication apparatus 1004. In the transmitting/receiving section 120 (220), the transmitting section 120a (220a) and the receiving section 120b (220b) can be implemented while being separated physically or logically.

The input apparatus 1005 is an input device that receives input from the outside (for example, a keyboard, a mouse, a microphone, a switch, a button, a sensor or the like). The output apparatus 1006 is an output device that allows sending output to the outside (for example, a display, a speaker, a Light Emitting Diode (LED) lamp or the like). Note that the input apparatus 1005 and the output apparatus 1006 may be provided in an integrated structure (for example, a touch panel).

Furthermore, these types of apparatus, including the processor 1001, the memory 1002, and others, are connected by a bus 1007 for communicating information. The bus 1007 may be formed with a single bus, or may be formed with buses that vary between apparatuses.

Also, the base station 10 and the user terminal 20 may be structured to include hardware such as a microprocessor, a Digital Signal Processor (DSP), an Application Specific Integrated Circuit (ASIC), a Programmable Logic Device (PLD), a Field Programmable Gate Array (FPGA), and so on, and a part or all of the functional blocks may be implemented by the hardware. For example, the processor 1001 may be implemented with at least one of these pieces of hardware.

### (Variations)

It should be noted that a term used in the present disclosure and a term required for understanding of the present disclosure may be replaced by a term having the same or similar meaning. For example, a channel, a symbol, and a signal (or signaling) may be interchangeably used. Further, a signal may be a message. A reference signal may be abbreviated as an RS, and may be referred to as a pilot, a pilot signal or the like, depending on which standard applies. Furthermore, a component carrier (CC) may be referred to as a cell, a frequency carrier, a carrier frequency and so on.

A radio frame may be constituted of one or a plurality of periods (frames) in the time domain. Each of one or a plurality of periods (frames) constituting a radio frame may be referred to as a "subframe". Furthermore, a subframe may be constituted of one or a plurality of slots in the time domain. A subframe may be a fixed time length (for example, 1 ms) independent of numerology.

Here, numerology may be a communication parameter applied to at least one of transmission and reception of a certain signal or channel. For example, numerology may indicate at least one of a subcarrier spacing (SCS), a bandwidth, a symbol length, a cyclic prefix length, a transmission time interval (TTI), the number of symbols per TTI, a radio frame structure, a specific filter processing performed by a transceiver in the frequency domain, a specific windowing processing performed by a transceiver in the time domain, and so on.

A slot may be constituted of one or a plurality of symbols in the time domain (Orthogonal Frequency Division Multiplexing (OFDM) symbols, Single Carrier Frequency Division Multiple Access (SC-FDMA) symbols, and so on). Furthermore, a slot may be a time unit based on numerology.

A slot may include a plurality of mini-slots. Each mini-slot may be constituted of one or a plurality of symbols in the time domain. A mini-slot may be referred to as a "sub-slot". A mini-slot may be constituted of symbols in number less than the slot. A PDSCH (or PUSCH) transmitted in a time unit larger than a mini-slot may be referred to as "PDSCH (PUSCH) mapping type A". A PDSCH (or PUSCH) transmitted using a mini-slot may be referred to as "PDSCH (PUSCH) mapping type B".

A radio frame, a subframe, a slot, a mini-slot, and a symbol all express time units in signal communication. A radio frame, a subframe, a slot, a mini-slot, and a symbol may each be called by other applicable terms. Note that time units such as a frame, a subframe, a slot, mini-slot, and a symbol in the present disclosure may be interchangeably used.

For example, one subframe may be referred to as a "TTI", a plurality of consecutive subframes may be referred to as a "TTI", or one slot or one mini-slot may be referred to as a "TTI". In other words, at least one of a subframe and a TTI may be a subframe (1 ms) in existing LTE, may be a period shorter than 1 ms (for example, 1 to 13 symbols), or may be a period longer than 1 ms. Note that a unit expressing TTI may be referred to as a "slot", a "mini-slot", or the like, instead of a "subframe".

Here, a TTI refers to the minimum time unit of scheduling in radio communication, for example. For example, in LTE systems, a base station performs, for user terminals, scheduling of allocating of radio resources (such as a frequency bandwidth and transmit power that are available for each user terminal) in TTI units. Note that the definition of TTIs is not limited to this.

The TTI may be a transmission time unit for channel-encoded data packets (transport blocks), code blocks, codewords, or the like, or may be a unit of processing in scheduling, link adaptation, or the like. Note that, when a TTI is given, a time interval (for example, the number of symbols) to which transport blocks, code blocks, codewords, or the like are actually mapped may be shorter than the TTI.

Note that, in the case where one slot or one mini-slot is referred to as a TTI, one or more TTIs (that is, one or more slots or one or more mini-slots) may be the minimum time unit of scheduling. Furthermore, the number of slots (the number of mini-slots) constituting the minimum time unit of the scheduling may be controlled.

A TTI having a time length of 1 ms may be referred to as a "normal TTI" (TTI in 3GPP Rel. 8 to Rel. 12), a "long TTI", a "normal subframe", a "long subframe", a "slot" and so on. A TTI that is shorter than a normal TTI may be referred to as a "shortened TTI", a "short TTI", a "partial or fractional TTI", a "shortened subframe", a "short subframe", a "mini-slot", a "sub-slot", a "slot" and so on.

Note that a long TTI (for example, a normal TTI, a subframe, and so on) may be interpreted as a TTI having a time length exceeding 1 ms, and a short TTI (for example, a shortened TTI and so on) may be interpreted as a TTI having a TTI length shorter than the TTI length of a long TTI and equal to or longer than 1 ms.

A resource block (RB) is the unit of resource allocation in the time domain and the frequency domain, and may include one or a plurality of consecutive subcarriers in the frequency domain. The number of subcarriers included in an RB may be the same regardless of numerology, and, for example, may be 12. The number of subcarriers included in an RB may be determined based on numerology.

Also, an RB may include one or a plurality of symbols in the time domain, and may be one slot, one mini-slot, one subframe, or one TTI in length. One TTI, one subframe, and so on each may be constituted of one or a plurality of resource blocks.

Note that one or a plurality of RBs may be referred to as a "physical resource block (Physical RB (PRB))", a "sub-carrier group (SCG)", a "resource element group (REG)", a "PRB pair", an "RB pair" and so on.

Furthermore, a resource block may be constituted of one or a plurality of resource elements (REs). For example, one RE may correspond to a radio resource field of one subcarrier and one symbol.

A bandwidth part (BWP) (which may be referred to as a "fractional bandwidth", and so on) may represent a subset of contiguous common resource blocks (common RBs) for certain numerology in a certain carrier. Here, a common RB may be specified by an index of the RB based on the common reference point of the carrier. A PRB may be defined by a certain BWP and may be numbered in the BWP.

The BWP may include a UL BWP (BWP for UL) and a DL BWP (BWP for DL). One or a plurality of BWPs may be configured in one carrier for a UE.

At least one of configured BWPs may be active, and a UE may not need to assume to transmit/receive a certain signal/channel outside the active BWP(s). Note that a "cell", a "carrier", and so on in the present disclosure may be used interchangeably with a "BWP".

Note that the above-described structures of radio frames, subframes, slots, mini-slots, symbols, and so on are merely examples. For example, structures such as the number of subframes included in a radio frame, the number of slots per subframe or radio frame, the number of mini-slots included in a slot, the numbers of symbols and RBs included in a slot or a mini-slot, the number of subcarriers included in an RB, the number of symbols in a TTI, the symbol length, the cyclic prefix (CP) length, and so on can be variously changed.

Further, the information, parameters, and so on described in the present disclosure may be expressed using absolute values or relative values with respect to certain values, or may be expressed using another corresponding information. For example, a radio resource may be specified by a certain index.

The names used for parameters and so on in the present disclosure are in no respect used as limitations. Furthermore, mathematical expressions that use these parameters, and so on may be different from those explicitly disclosed in the present disclosure. Since various channels (PUCCH, PDCCH, and so on) and information elements may be identified by any suitable names, the various names allocated to these various channels and information elements are in no respect used as limitations.

The information, signals, and so on described in the present disclosure may be represented by using any of a variety of different technologies. For example, data, an instruction, a command, information, a signal, a bit, a symbol, a chip, and so on, described throughout the description of the present application, may be represented by a voltage, an electric current, electromagnetic waves, magnetic fields, a magnetic particle, optical fields, a photon, or any combination thereof.

Also, information, signals, and so on can be output at least one of from a higher layer to a lower layer and from a lower layer to a higher layer. Information, signals, and so on may be input and/or output via a plurality of network nodes.

The information, signals, and so on that are input and/or output may be stored in a specific location (for example, a memory) or may be managed by using a management table. The information, signals, and so on to be input and/or output can be overwritten, updated, or added. The information, signals, and so on that has been output may be deleted. The information, signals, and so on that has been input may be transmitted to another apparatus.

Notification of information is by no means limited to the aspects/embodiments described in the present disclosure, and other methods may be used as well. For example, notification of information in the present disclosure may be implemented by using physical layer signaling (for example, downlink control information (DCI), uplink control information (UCI)), higher layer signaling (for example, Radio Resource Control (RRC) signaling, broadcast information (master information block (MIB), system information block (SIB), and so on), Medium Access Control (MAC) signaling and so on), and other signals or combinations of these.

Note that physical layer signaling may be referred to as "Layer 1/Layer 2 (L1/L2) control information (L1/L2 control signals)", "L1 control information (L1 control signal)", and so on. Also, RRC signaling may be referred to as an "RRC message", and can be, for example, an RRC connection setup message, an RRC connection reconfiguration message, and so on. Also, MAC signaling may be notified using, for example, MAC control elements (MAC CEs).

Also, notification of certain information (for example, notification of "X") does not necessarily have to be performed explicitly, and can be performed implicitly (by, for example, not reporting this certain information or reporting another piece of information).

A decision may be realized by a value (0 or 1) represented by one bit, by a boolean value (true or false), or by comparison of numerical values (e.g., comparison with a certain value).

Software, irrespective of whether referred to as "software", "firmware", "middleware", "microcode", or "hardware description language", or called by other terms, should be interpreted broadly to mean instructions, instruction sets, codes, code segments, program codes, programs, subprograms, software modules, applications, software applications, software packages, routines, subroutines, objects, executable files, execution threads, procedures, functions, and the like.

Also, software, instructions, information, and the like may be transmitted and received via a transmission medium. For example, when software is transmitted from a website, a server, or other remote sources by using at least one of wired technologies (coaxial cable, fiber optic cable, twisted-pair cable, digital subscriber line (DSL), and so on) and wireless technologies (infrared radiation, microwaves, and so on), at least one of these wired technologies and wireless technologies is also included in the definition of the transmission medium.

The terms "system" and "network" used in the present disclosure may be used interchangeably. The "network" may mean an apparatus (for example, a base station) included in the network.

In the present disclosure, the terms such as "precoding", a "precoder", a "weight (precoding weight)", "quasi-co-location (QCL)", a "Transmission Configuration Indication state (TCI state)", a "spatial relation", a "spatial domain filter", a "transmit power", "phase rotation", an "antenna port", an "antenna port group", a "layer", "the number of layers", a "rank", a "resource", a "resource set", a "resource group", a "beam", a "beam width", a "beam angular degree", an "antenna", an "antenna element", a "panel", and so on may be used interchangeably.

In the present disclosure, the terms such as a "base station (BS)", a "radio base station", a "fixed station," a "NodeB", an "eNB (eNodeB)", a "gNB (gNodeB)", an "access point", a "transmission point (TP)", a "reception point (RP)", a "transmission/reception point (TRP)", a "panel", a "cell", a "sector", a "cell group", a "carrier", a "component carrier", and so on can be used interchangeably. The base station may be referred to as the terms such as a "macro cell", a "small cell", a "femto cell", a "pico cell", and so on.

A base station can accommodate one or a plurality of (for example, three) cells. When a base station accommodates a plurality of cells, the entire coverage area of the base station can be partitioned into multiple smaller areas, and each smaller area can provide communication services through base station subsystems (for example, indoor small base stations (Remote Radio Heads (RRHs))). The term "cell" or "sector" refers to part of or the entire coverage area of at least one of a base station and a base station subsystem that provides communication services within this coverage.

In the present disclosure, transmitting information to the terminal by the base station may be interchangeably interpreted as instructing the terminal to perform control/operation based on the information by the base station.

In the present disclosure, the terms "mobile station (MS)", "user terminal", "user equipment (UE)", and "terminal" may be used interchangeably.

A mobile station may be referred to as a "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", or some other appropriate terms in some cases.

At least one of a base station and a mobile station may be referred to as a "transmitting apparatus", a "receiving apparatus", a "radio communication apparatus" or the like. Note that at least one of a base station and a mobile station may be a device mounted on a moving object or a moving object itself, and so on.

The moving object is a movable object with any moving speed, and naturally, it also includes a moving object stopped. Examples of the moving object include a vehicle, a transport vehicle, an automobile, a motorcycle, a bicycle, a connected car, a loading shovel, a bulldozer, a wheel loader, a dump truck, a fork lift, a train, a bus, a trolley, a rickshaw, a ship and other watercraft, an airplane, a rocket, a satellite, a drone, a multicopter, a quadcopter, a balloon, and an object mounted on any of these, but these are not restrictive. The moving object may be a moving object that autonomously travels based on a direction for moving.

The moving object may be a vehicle (for example, a car, an airplane, and the like), may be a moving object which moves unmanned (for example, a drone, an automatic operation car, and the like), or may be a robot (a manned type or unmanned type). Note that at least one of a base station and a mobile station also includes an apparatus which does not necessarily move during communication operation. For example, at least one of a base station and a mobile station may be an Internet of Things (IoT) device such as a sensor.

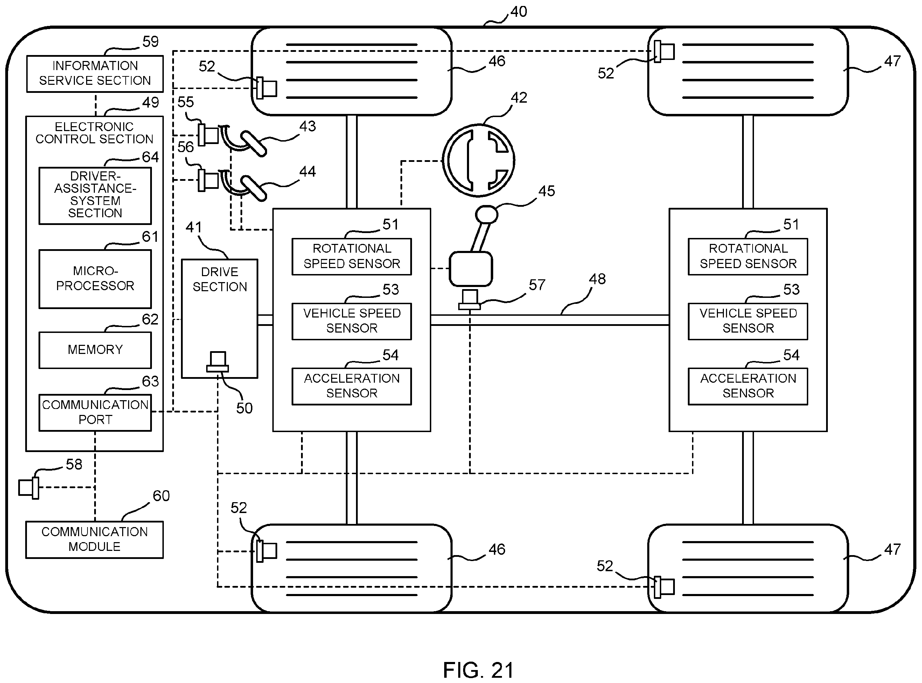

FIG. 21 is a diagram to show an example of a vehicle according to one embodiment. A vehicle 40 includes a driving section 41, a steering section 42, an accelerator pedal 43, a brake pedal 44, a shift lever 45, right and left front wheels 46, right and left rear wheels 47, an axle 48, an electronic control section 49, various sensors (including a current sensor 50, a rotational speed sensor 51, a pneumatic sensor 52, a vehicle speed sensor 53, an acceleration sensor 54, an accelerator pedal sensor 55, a brake pedal sensor 56, a shift lever sensor 57, and an object detection sensor 58), an information service section 59, and a communication module 60.

The driving section 41 includes, for example, at least one of an engine, a motor, and a hybrid of an engine and a motor. The steering section 42 includes at least a steering wheel (also referred to as a handle), and is configured to steer at least one of the front wheels 46 and the rear wheels 47, based on operation of the steering wheel operated by a user.

The electronic control section 49 includes a microprocessor 61, a memory (ROM, RAM) 62, and a communication port (for example, an input/output (IO) port) 63. The electronic control section 49 receives, as input, signals from the various sensors 50 to 58 provided in the vehicle. The electronic control section 49 may be referred to as an Electronic Control Unit (ECU).

Examples of the signals from the various sensors 50 to 58 include a current signal from the current sensor 50 for sensing current of a motor, a rotational speed signal of the front wheels 46/rear wheels 47 acquired by the rotational speed sensor 51, a pneumatic signal of the front wheels 46/rear wheels 47 acquired by the pneumatic sensor 52, a vehicle speed signal acquired by the vehicle speed sensor 53, an acceleration signal acquired by the acceleration sensor 54, a depressing amount signal of the accelerator pedal 43 acquired by the accelerator pedal sensor 55, a depressing amount signal of the brake pedal 44 acquired by the brake pedal sensor 56, an operation signal of the shift lever 45 acquired by the shift lever sensor 57, and a detection signal for detecting an obstruction, a vehicle, a pedestrian, and the like acquired by the object detection sensor 58.

The information service section 59 includes: various devices for providing (outputting) various pieces of information such as driving information, traffic information, and entertainment information, such as a car navigation system, an audio system, a speaker, a display, a television, and a radio; and one or more ECUs that control these devices. The information service section 59 provides various pieces of information/services (for example, multimedia information/multimedia service) to an occupant of the vehicle 40, using information acquired from an external apparatus via the communication module 60 and the like.

The information service section 59 may include an input device (for example, a keyboard, a mouse, a microphone, a switch, a button, a sensor, a touch panel, and the like) for receiving input from the outside, or may include an output device (for example, a display, a speaker, an LED lamp, a touch panel, and the like) for implementing output to the outside.

A driving assistance system section 64 includes: various devices for providing functions for preventing an accident and reducing a driver's driving load, such as a millimeter wave radar, Light Detection and Ranging (LiDAR), a camera, a positioning locator (for example, a Global Navigation Satellite System (GNSS) and the like), map information (for example, a high definition (HD) map, an autonomous vehicle (AV) map, and the like), a gyro system (for example, an inertial measurement apparatus (inertial measurement unit (IMU)), an inertial navigation apparatus (inertial navigation system (INS)), and the like), an artificial intelligence (AI) chip, and an AI processor; and one or more ECUs that control these devices. The driving assistance system section 64 transmits and receives various pieces of information via the communication module 60, and implements a driving assistance function or an autonomous driving function.

The communication module 60 can communicate with the microprocessor 61 and the constituent elements of the vehicle 40 via the communication port 63. For example, the communication module 60 transmits and receives data (information), via the communication port 63, to and from the driving section 41, the steering section 42, the accelerator pedal 43, the brake pedal 44, the shift lever 45, the right and left front wheels 46, the right and left rear wheels 47, the axle 48, the microprocessor 61 and the memory (ROM, RAM) 62 in the electronic control section 49, and the various sensors 50 to 58, which are included in the vehicle 40.

The communication module 60 is a communication device that can be controlled by the microprocessor 61 of the electronic control section 49 and that can perform communication with an external apparatus. For example, the communication module 60 performs transmission and reception of various pieces of information to and from the external apparatus via radio communication. The communication module 60 may be either inside or outside the electronic control section 49. The external apparatus may be, for example, the base station 10, the user terminal 20, or the like described above. The communication module 60 may be, for example, at least one of the base station 10 and the user terminal 20 described above (may function as at least one of the base station 10 and the user terminal 20).

The communication module 60 may transmit at least one of signals input from the various sensors 50 to 58 to the electronic control section 49, information obtained based on the signals, and information based on an input from the outside (a user) obtained via the information service section 59, to the external apparatus via radio communication. The electronic control section 49, the various sensors 50 to 58, the information service section 59, and the like may be referred to as input sections that receive input. For example, the PUSCH transmitted by the communication module 60 may include information based on the input.

The communication module 60 receives various pieces of information (traffic information, signal information, intervehicle distance information, and the like) transmitted from the external apparatus, and displays the received information on the information service section 59 included in the vehicle. The information service section 59 may be referred to as an output section that outputs information (for example, outputs information to devices, such as a display and a speaker, based on the PDSCH received by the communication module 60 (or data/information decoded from the PDSCH)).

The communication module 60 stores the various pieces of information received from the external apparatus in the memory 62 that can be used by the microprocessor 61. Based on the pieces of information stored in the memory 62, the microprocessor 61 may control the driving section 41, the steering section 42, the accelerator pedal 43, the brake pedal 44, the shift lever 45, the right and left front wheels 46, the right and left rear wheels 47, the axle 48, the various sensors 50 to 58, and the like provided in the vehicle 40.

Furthermore, the base station in the present disclosure may be interpreted as a user terminal. For example, each aspect/embodiment of the present disclosure may be applied to the structure that replaces a communication between a base station and a user terminal with a communication between a plurality of user terminals (for example, which may be referred to as "Device-to-Device (D2D)", "Vehicle-to-Everything (V2X)", and the like). In this case, user terminals 20 may have the functions of the base stations 10 described above. The words such as "uplink" and "downlink" may be interpreted as the words corresponding to the terminal-to-terminal communication (for example, "sidelink"). For example, an uplink channel, a downlink channel and so on may be interpreted as a sidelink channel.

Likewise, the user terminal in the present disclosure may be interpreted as a base station. In this case, the base station 10 may have the functions of the user terminal 20 described above.

Operations which have been described in the present disclosure to be performed by a base station may, in some cases, be performed by an upper node of the base station. In a network including one or a plurality of network nodes with base stations, it is clear that various operations that are performed to communicate with terminals can be performed by base stations, one or more network nodes (for example, Mobility Management Entities (MMEs), Serving-Gateways (S-GWs), and so on may be possible, but these are not limiting) other than base stations, or combinations of these.

Each aspect/embodiment described in the present disclosure may be used independently, may be used in combination, or may be switched depending on the mode of implementation. The order of processes, sequences, flowcharts, and so on that have been used to describe the aspects/embodiments in the present disclosure may be re-ordered as long as inconsistencies do not arise. For example, although various methods have been illustrated in the present disclosure with various components of steps in exemplary orders, the specific orders that are illustrated herein are by no means limiting.

The aspects/embodiments illustrated in the present disclosure may be applied to Long Term Evolution (LTE), LTE-Advanced (LTE-A), LTE-Beyond (LTE-B), SUPER 3G, IMT-Advanced, 4th generation mobile communication system (4G), 5th generation mobile communication system (5G), 6th generation mobile communication system (6G), xth generation mobile communication system (xG (where x is, for example, an integer or a decimal)), Future Radio Access (FRA), New-Radio Access Technology (RAT), New Radio (NR), New radio access (NX), Future generation radio access (FX), Global System for Mobile communications (GSM (registered trademark)), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), systems that use other adequate radio communication methods and next-generation systems that are enhanced, modified, created, or defined based on these. A plurality of systems may be combined (for example, a combination of LTE or LTE-A and 5G, and the like) for application.

The phrase "based on" (or "on the basis of") as used in the present disclosure does not mean "based only on" (or "only on the basis of"), unless otherwise specified. In other words, the phrase "based on" (or "on the basis of") means both "based only on" and "based at least on" ("only on the basis of" and "at least on the basis of").

Reference to elements with designations such as "first", "second", and so on as used in the present disclosure does not generally limit the quantity or order of these elements. These designations may be used in the present disclosure only for convenience, as a method for distinguishing between two or more elements. Thus, reference to the first and second elements does not imply that only two elements may be employed, or that the first element must precede the second element in some way.

The term "deciding (determining)" as in the present disclosure herein may encompass a wide variety of actions. For example, "deciding (determining)" may be interpreted to mean making "decisions(determinations)" about judging, calculating, computing, processing, deriving, investigating, looking up, search and inquiry (for example, searching a table, a database, or some other data structures), ascertaining, and so on.

Furthermore, "deciding (determining)" may be interpreted to mean making "decisions(determinations)" about receiving (for example, receiving information), transmitting (for example, transmitting information), input, output, accessing (for example, accessing data in a memory), and so on.

In addition, "deciding (determining)" as used herein may be interpreted to mean making "decisions(determinations)" about resolving, selecting, choosing, establishing, comparing, and so on. In other words, "deciding (determining)" may be interpreted to mean making "decisions (determinations)" about some action.

"Decide/deciding (determine/determining)" may be used interchangeably with "assume/assuming", "expect/expecting", "consider/considering", and the like.

"The maximum transmit power" described in the present disclosure may mean a maximum value of the transmit power, may mean the nominal maximum transmit power (the nominal UE maximum transmit power), or may mean the rated maximum transmit power (the rated UE maximum transmit power).

The terms "connected", "coupled", or any variation of these terms as used in the present disclosure mean any direct or indirect connections or coupling between two or more elements, and may include the presence of one or more intermediate elements between two elements that are "connected" or "coupled" to each other. The coupling or connection between the elements may be physical, logical, or a combination thereof. For example, "connection" may be interpreted as "access".

In the present disclosure, when two elements are connected, the two elements may be considered "connected" or "coupled" to each other by using one or more electrical wires, cables and printed electrical connections, and, as some non-limiting and noninclusive examples, by using electromagnetic energy having wavelengths in radio frequency regions, microwave regions, (both visible and invisible) optical regions, or the like.

In the present disclosure, the phrase "A and B are different" may mean that "A and B are different from each other". It should be noted that the phrase may mean that "A and B are each different from C". The terms "separate", "coupled", and so on may be interpreted similarly to "different".

In the case where the terms "include", "including", and variations thereof are used in the present disclosure, these terms are intended to be comprehensive, in a manner similar to the term "comprising". Furthermore, the term "or" used in the present disclosure is not intended to be an "exclusive or".

For example, in the present disclosure, where an article such as "a", "an", and "the" is added by translation, the present disclosure may include that a noun after the article is in a plural form.

In the present disclosure, "equal to or less than", "less than", "equal to or more than", "more than", "equal to", and the like may be used interchangeably. In the present disclosure, words such as "good", "bad", "large", "small", "high", "low", "early", "late", "wide", "narrow", and the like may be used interchangeably irrespective of positive degree, comparative degree, and superlative degree. In the present disclosure, expressions obtained by adding "i-th" (i is any integer) to words such as "good", "bad", "large", "small", "high", "low", "early", "late", "wide", "narrow", and the like may be used interchangeably irrespective of positive degree, comparative degree, and superlative degree (for example, "best" may be used interchangeably with "i-th best", and vice versa).

In the present disclosure, "of", "for", "regarding", "related to", "associated with", and the like may be used interchangeably.

Now, although the invention according to the present disclosure has been described in detail above, it is apparent to a person skilled in the art that the invention according to the present disclosure is by no means limited to the embodiments described in the present disclosure. Modifications, alternatives, replacements, etc., of the invention according to the present disclosure may be possible without departing from the subject matter and the scope of the present invention defined based on the descriptions of claims. The description of the present disclosure is provided only for the purpose of explaining examples, and should by no means be construed to limit the invention according to the present disclosure in any way.

## Claims

1. A terminal comprising:
a receiving section that receives information related to at least one of a channel state information resource configuration and a channel state information report configuration for one or more candidate cells corresponding to different frequencies; and
a control section that controls, based on the information related to at least one of the channel state information resource configuration and the channel state information report configuration, to report channel state information including at least one of L1-RSRP (Reference Signal Received Power) and L1-SINR (Signal to Interference plus Noise Ratio) for the one or more candidate cells.

2. The terminal according to claim 1, wherein
the control section controls, when reporting of both the L1-RSRP and the L1-SINR is configured, to report both the L1-RSRP and the L1-SINR for a specific candidate cell or specific reference signal resource index and to report either one of the L1-RSRP or the L1-SINR for another candidate cell or reference signal resource index.

3. The terminal according to claim 1, wherein
the control section controls, when reporting of either one of the L1-RSRP or the L1-SINR is configured, to report both the L1-RSRP and the L1-SINR for a specific candidate cell or specific reference signal resource index and to report either one of the L1-RSRP or the L1-SINR for another candidate cell or reference signal resource index.

4. The terminal according to claim 1, wherein
at least one of the channel state information resource configuration and the channel state information report configuration includes at least one of information related to a frequency for measurement to be performed and information related a frequency for a measurement result to be reported.

5. A radio communication method for a terminal, comprising:
receiving information related to at least one of a channel state information resource configuration and a channel state information report configuration for one or more candidate cells corresponding to different frequencies; and
controlling, based on the information related to at least one of the channel state information resource configuration and the channel state information report configuration, to report channel state information including at least one of L1-RSRP (Reference Signal Received Power) and L1-SINR (Signal to Interference plus Noise Ratio) for the one or more candidate cells.

6. A base station comprising:
a transmitting section that transmits information related to at least one of a channel state information resource configuration and a channel state information report configuration for one or more candidate cells corresponding to different frequencies; and
a control section that indicates, based on the information related to at least one of the channel state information resource configuration and the channel state information report configuration, reporting of channel state information including at least one of L1-RSRP (Reference Signal Received Power) and L1-SINR (Signal to Interference plus Noise Ratio) for the one or more candidate cells.
